# EUROPÄISCHE PATENTSCHRIFT

(11) **EP 2 519 808 B1**
(45) Veröffentlichungstag und Bekanntmachung des Hinweises auf die Patenterteilung: **14.12.2016**
(21) Anmeldenummer: 10796072.6
(22) Anmeldetag: 22.12.2010
(51) Int. Cl.: G01N 35/10, G01F 23/26

(54) **VERFAHREN UND VORRICHTUNG ZUR DETEKTION VON PHASENGRENZEN UND ENTSPRECHEND AUSGESTATTETES LABORGERÄT**
METHOD AND DEVICE FOR DETECTING PHASE BOUNDARIES AND CORRESPONDINGLY EQUIPPED LABORATORY DEVICE
PROCÉDÉ ET DISPOSITIF DE DÉTECTION DE LIMITES DE PHASE ET APPAREIL DE LABORATOIRE ÉQUIPÉ EN CONSÉQUENCE

(30) Priorität: 30.12.2009 CH 20112009
(43) Veröffentlichungstag der Anmeldung: 07.11.2012
(73) Patentinhaber: Tecan Trading AG, 8708 Männedorf (CH)
(72) Erfinder: SCHÖNI, Markus, CH-8606 Nänikon (CH); CORS, Nicolas, CH-8712 Stäfa (CH); WIGGLI, Markus, CH-8632 Tann (CH); ZUPPIGER, Adi, CH-8854 Siebnen (CH)
(74) Vertreter: OK pat AG
(86) Internationale Anmeldenummer: PCT/EP2010/070599
(87) Internationale Veröffentlichungsnummer: WO 2011/080199

(56) Entgegenhaltungen:
- DE-A1-102007 061 573
- US-A1- 2005 092 080
- US-A1- 2007 144 253

## Beschreibung

Die Erfindung betrifft Verfahren und Vorrichtungen zur Detektion einer Phasengrenze und ein entsprechend ausgestattetes Laborgerät. Insbesondere geht es um Laborgeräte, die zum Detektieren eines Flüssigkeitsniveaus in einem Flüssigkeitsbehälter ausgelegt sind.

Es wird die Priorität der Schweizer Patentanmeldung CH 02011/09 beansprucht, die am 30. Dezember 2009 eingereicht wurde.

### Hintergrund der Erfindung

Es gibt zahlreiche Laborsysteme und medizinische, sowie pharmazeutische Geräte, bei denen es wichtig ist den Füllstand in Reagenzgläsern, Titerplatten oder dergleichen zu ermitteln. Es gibt auch Anwendungen, bei denen es um die Detektion von Flüssig-Flüssig-Phasengrenzen geht. Im Folgenden wird der Begriff der Phasengrenze sowohl für Übergänge zwischen gasförmigen und flüssigen Medien (Gas-Flüssig-Phasengrenze) und für Übergänge zwischen verschiedenen flüssigen Medien (Flüssig-Flüssig-Phasengrenze) verwendet.

Besonders wenn es um die Automation von Mess- oder Versuchsabläufen geht, ist eine solche Ermittlung der Phasengrenze von Bedeutung. Die Füllstandsermittlung erfolgt typischerweise mittels einer Detektion des Flüssigkeitsniveaus, d.h. es wird die Lage der Phasengrenze zwischen Luft und Flüssigkeit ermittelt. Dieser Vorgang wird auch als "Liquid Level Detection" (LLD) bezeichnet.

Die Liquid Level Detection kommt z.B. in Pipettiergeräten zum Einsatz. Hier soll beim Ansaugen mit einer Pipette die Pipettiernadel so gering wie möglich in die zu pipettierende Flüssigkeit eingetaucht werden, um eine Verschmutzung mit Probenflüssigkeit so gering wie möglich zu halten. Beim Ansaugen wird die Pipettiernadel deshalb typischerweise nur 2 mm unter das Flüssigkeitsniveau eingetaucht, um sicherzugehen, dass die Pipettiernadel genügend eingetaucht ist und damit keine Luft angesaugt werden kann. Während des Ansaugvorganges wird die Pipettiernadel dann kontinuierlich dem absinkenden Flüssigkeitsspiegel nachgeführt, damit sie immer gleich tief in Bezug zum Flüssigkeitsniveau eingetaucht bleibt. Nach dem Ansaugen kann z.B. anhand des angesaugten Volumens und der Querschnittsfläche des Flüssigkeitsbehälters berechnet werden, auf welcher Höhe sich die Gas-Flüssig-Phasengrenze befinden sollte. Beim Austauchen der Pipettenspitze kann ein Austauchsignal mit der errechneten Position der Gas-Flüssig-Phasengrenze verglichen werden, um so den Pipettiervorgang zu verifizieren. Da ein Gas und eine Flüssigkeit deutlich unterschiedliche Dielektrizitätskonstanten besitzen, kann die Gas-Flüssig-Phasengrenze über eine Kapazitätsänderung bestimmt werden.

Die Detektion von Flüssig-Flüssig-Phasengrenzen spielt z.B. bei einer Flüssig-Flüssig-Extraktion eine wichtige Rolle. Bei der Flüssig-Flüssig-Extraktion wird die unterschiedliche Löslichkeit von Stoffen in zwei nicht miteinander mischbaren Lösungsmitteln ausgenutzt. Als Lösungsmittel dienen je eine hydrophile Phase (meistens Wasser) und ein hydrophobes organisches Lösungsmittel. Nach der Extraktion wird die Phase mit dem extrahierten Stoff abpipettiert. Dabei ist es oft wichtig, die exakte Phasengrenze zwischen wässriger und organischer Phase zu kennen, um nicht versehentlich von der anderen Phase abzupipettieren. Da nicht mischbare Flüssigkeiten deutlich unterschiedliche Dielektrizitätskonstanten besitzen, kann die Flüssig-Flüssig-Phasengrenze über eine Kapazitätsänderung bestimmt werden. Dies kann z.B. dazu verwendet werden, um eine Zwischenphase abzupipettieren.

In den letzten Jahren wurden die Laborgeräte immer genauer und komplexer. Der Trend geht in Richtung hoher Integration, Automation und Parallelität. Dies führt zu einer hohen räumlichen Verdichtung der einzelnen Komponenten. Diese Verdichtung bringt nicht nur mechanische und andere konstruktionstechnische Probleme mit sich, sondern auch die Genauigkeit der elektronischen Auswertbarkeit, das sich gegenseitig Beeinflussen benachbarter Messkanäle und andere Aspekte können zu Problemen führen.

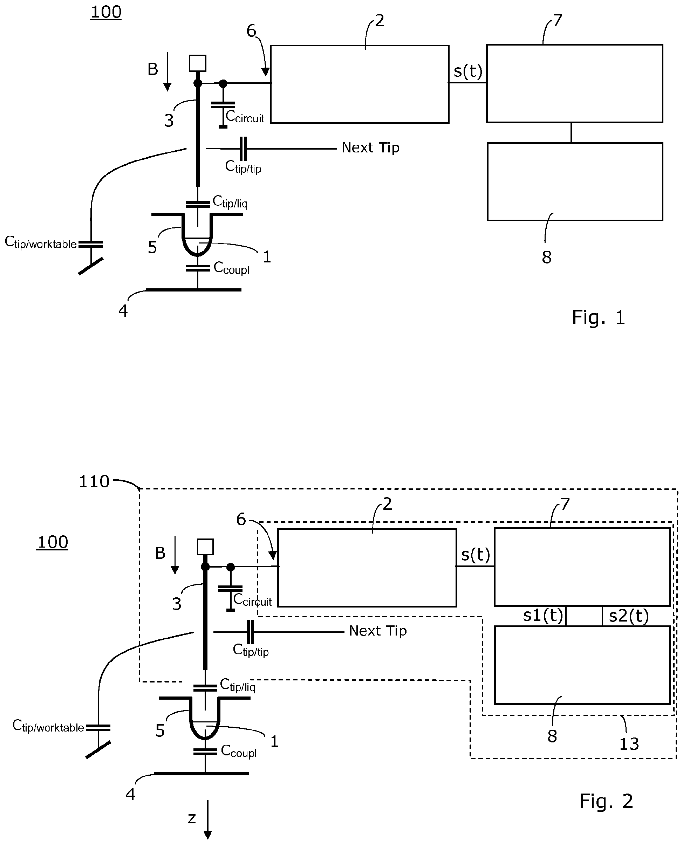

Das Detektieren einer Phasengrenze wird typischerweise auf kapazitivem Weg gemacht, wie anhand von Fig. 1 schematisch gezeigt. Fig. 1 zeigt den Aufbau eines bekannten Laborgeräts 100, das hier zum Detektieren eines Flüssigkeitsniveaus ausgelegt ist. Die Anwesenheit einer Flüssigkeit 1 oder die Phasengrenze zwischen Luft und Flüssigkeit 1 wird hier z.B. durch das Beobachten einer Kapazitätsänderung C_{tip/liq} detektiert. Eine elektronische Lade-/Entlade-Schaltung 2 sorgt für ein Aufladen und Entladen, um die effektive Kapazität zwischen einem Fühler, z.B. in Form einer Pipettenspitze 3, und einer geerdeten Grundplatte 4 messen zu können. Die Signalverarbeitung kann mit einer Signalverarbeitungsschaltung 7 erfolgen, die z.B. von einem Controller 8 unterstützt wird.

Die Funktionsweise des Laborgeräts 100 kann je nach Kapazitäts-Messmethode unterschiedlich sein. Z.B. kann durch die Lade-/Entlade-Schaltung 2 eine Anregung mit einem Sinussignal erfolgen, um dann mit der Signalverarbeitungsschaltung 7 und dem Controller 8 eine Signalphasenverschiebung zu messen, welche die Grösse der Kapazität widerspiegelt. Es ist auch möglich mittels einer anderen Lade-/Entlade-Schaltung 2 eine Kapazität über einen Widerstand aufzuladen und dann eine direkte Entladung der Kapazität über einen Transistor, z.B. einen FET-Transistor (Feld-Effekt Transistor), vorzunehmen.

Ein weiteres Kapazitäts-Messverfahren wäre die Bildung eines Schwingkreises, der aus einer Spule und der Messkapazität besteht, und bei dem die Resonanzfrequenz des Schwingkreises ausgewertet wird, die sich mit Vergrösserung der Kapazität verringert.

Die effektive Kapazität, die sich je nach Laborgerät 100 ergibt aus den Streukapazitäten, elektrischen Einkopplungen durch den Fühler oder die Pipettenspitze 3, der Leitfähigkeit der Flüssigkeit 1 und dem Übersprechen zwischen benachbarten Messkanälen (in Fig. 1 Next Tip genannt), ist sehr klein. Sie liegt typischerweise im Bereich von wenigen Picofarad (pF). Die Kapazitätsänderung C_{tip/liq}, die sich beim Eintauchen aus der Luft in eine Flüssigkeit ergibt, ist nochmals ca. um einen Faktor 100 bis 1000 kleiner.

Für das Detektieren von Phasengrenzen werden bisher typischerweise Signalverarbeitungsschaltungen 7 eingesetzt, die einen kurzen Signalsprung im gemessenen Ausgangssignal s(t) auswerten, der z.B. beim Durchstossen des Fühlers 3 einer Phasengrenze (hier beim Eintauchen in die Flüssigkeit 1) entsteht.

Problematisch ist, dass die zu messende Kapazitätsänderung C_{tip/liq} im gemessenen Ausgangssignal s(t) kaum zu erkennen ist, da sich hier z.B. Streukapazitäten, wie C_{tip/tip}, die durch Übersprechen von benachbarten Kanälen stammen, und Kapazitätsänderungen aufgrund sich bewegender elektrischer Zuleitungen usw. überlagern.

Mit dem zunehmenden Grad der Automatisierung der Laborgeräte ist es wünschenswert, die entsprechenden Abläufe so zu gestalten, dass es nur wenig manuelle Interventionen braucht. Dabei ist zu berücksichtigen, dass z.B. in automatisierten Pipetiersystemen oder -geräten zahlreiche Situationen auftreten können, die von bisherigen automatisierten Pipetiersystemen oder -geräten nicht selbsttätig gelöst werden können.
US 2005/0092080 A1 beschreibt ein Sensorsystem bei dem ein vom Sensor kommendes Signal einerseits ungefiltert und andererseits hochpass-gefiltert weitergeleitet wird.

Es stellt sich daher die Aufgabe, eine Vorrichtung und ein Verfahren zum Detektieren einer Phasengrenze bereitzustellen, die jederzeit ein sicheres Detektieren der Phasengrenze ermöglichen. Ausserdem geht es darum ein entsprechendes Laborgerät bereit zu stellen.

Das Verfahren, respektive die Vorrichtung oder das Laborgerät soll vorzugsweise so ausgelegt sein, dass es kritische Situationen oder Spezialfälle selbständig erkennt und somit keine manuelle oder mechanische Intervention erfordert.

Diese Aufgaben werden erfindungsgemäß gelöst durch ein Verfahren nach Anspruch 1, eine Vorrichtung nach Anspruch 11 und ein Laborgerät nach Anspruch 19.

Das erfindungsgemäße Verfahren zeichnet sich durch die kennzeichnenden Merkmale des Anspruchs 1 aus. Die erfindungsgemäße Vorrichtung zeichnet sich durch die kennzeichnenden Merkmale des Anspruchs 11 und das erfindungsgemäße Laborgerät durch die kennzeichnenden Merkmale des Anspruchs 19 aus.

In einer besonders bevorzugten Ausführungsform der Erfindung wird abwechselnd ein Laden und Entladen vorgenommen, während der Fühler in Richtung der zu detektierenden Phasengrenze zugestellt wird. Beim Erreichen der Phasengrenze (z.B. eines Flüssigkeitsniveaus) ergibt sich eine Kapazitätsänderung, die durch ein Verarbeiten eines Ausgangssignals ausgewertet wird. Im Rahmen dieser Verarbeitung, die hier auch als Auswertung oder Signalauswertung bezeichnet wird, erfolgt ein Auftrennen des Ausgangssignals mittels eines ersten Filters und eines zweiten Filters. Der erste Filter liefert ein erstes Signal mit kurzer Pulsweite und der zweite Filter ein zweites Signal mit grösserer Pulsweite. Anhand dieser beiden Signale wird nun einerseits ermittelt, ob das erste Signal mindestens ein vorgegebenes erstes Signalkriterium (z.B. Schwellwert und/oder Pulsweite und/oder Steigung) erfüllt. Andererseits wird ermittelt, ob das zweite Signal mindestens ein vorgegebenes zweites Signalkriterium (z.B. Schwellwert und/oder Pulsweite und/oder Steigung und/oder monotone Steigung über mehrere Messpunkte hinweg) erfüllt. Falls die ersten und die zweiten Signalkriterien erfüllt sind, wird eine Kennung (z.B. in Form eines Signals oder speziellen Codes) ausgegeben, die eine Detektion eines Flüssigkeitsniveaus darstellt oder anzeigt.

Die Erfindung ist dazu ausgelegt, relative Kapazitätsmessungen oder -auswertungen vorzunehmen, da durch eine relative Betrachtung zahlreiche Stör- und Einflussgrössen, wie zum Beispiel die Tiefe der aktuellen Eintauchposition, weniger oder keinen Einfluss haben. Eine relative Kapazitätsmessung oder -auswertung führt zu deutlich robusteren und wiederholbareren Ergebnissen. Das Ermitteln absoluter Kapazitätswerte zur Detektion von Phasengrenzen ist sehr aufwändig, da Signale beim Durchtreten einer Phasengrenze um Grössenordnungen kleiner sind als die eigentlichen Kapazitätswerte der Vorrichtung. Ausserdem werden absolute Aussagen dadurch erschwert, dass das gesamte Umfeld aus Signalverarbeitungssicht "schwebend" ist.

Gemäss Erfindung werden ein langsames Signal und ein schnelles Signal elektronisch ausgewertet. Das schnelle Signal kann als ein "Wecksignal" eingesetzt werden. Falls das schnelle Signal ein erstes Kriterium erfüllt, z.B. einen ersten Schwellwert übersteigt, wird angenommen, dass eine gültige Detektion vorliegt und es folgen weitere Verfahrensschritte. Anhand einer Auswertung/Verarbeitung des langsamen Signals werden dann genauere Betrachtungen durchgeführt. So können zum Beispiel elektrostatische Störungen "ausgefiltert" werden, da bei einer elektrostatischen Störung zwar ein schnelles erstes Signal auftreten kann, aber kein langsames zweites Signal auftritt, das für eine "rechte" Detektion sprechen würde.

Es ist ein Vorteil der vorliegenden Erfindung, dass das langsame Signal eine Reihe von Aussagen zulässt, die sonst nur aus einem absolut gemessenen Signal erhältlich wären.

Durch die Erfindung ist es möglich Universalvorrichtungen und Laborgeräte bereit zu stellen, die in den verschiedensten Situationen und unter den verschiedensten Voraussetzungen zuverlässige Detektionsergebnisse liefern.

Die erfindungsgemäße Vorrichtung, das erfindungsgemäße Laborgerät und das erfindungsgemäße Verfahren werden nun an Hand von schematischen, den Umfang der Erfindung nicht beschränkenden Zeichnungen von beispielhaften Ausführungsformen im Detail erläutert.
- Fig. 1: zeigt eine schematische Seitenansicht eines Laborgeräts gemäß Stand der Technik;
- Fig. 2: zeigt eine schematische Seitenansicht einer erfindungsgemäßen Vorrichtung mit einer erfindungsgemäßen Schaltung;
- Fig. 3: zeigt ein schematisches Amplituden-Zeit-Diagramm in dem zwei erfindungsgemäße Signale in vereinfachter Form dargestellt sind, um die Anwendung von Kriterien gemäss einer ersten Ausführungsform beschreiben zu können;
- Fig. 4: zeigt ein schematisches Flussdiagramm des Funktionsprinzips einer erfindungsgemäßen Vorrichtung;
- Fig. 5: zeigt ein schematisches Flussdiagramm des Funktionsprinzips der Signalauswertung einer erfindungsgemäßen Vorrichtung;
- Fig. 6: zeigt eine schematische Seitenansicht einer weiteren erfindungsgemäßen Vorrichtung mit einer weiteren erfindungsgemäßen Schaltung;
- Fig. 7: zeigt ein schematisches Amplituden-Zeit-Diagramm in dem zwei erfindungsgemäße Signale in vereinfachter Form dargestellt sind, um die Anwendung von Kriterien gemäss einer weiteren Ausführungsform beschreiben zu können;
- Fig. 8: zeigt ein schematisches Flussdiagramm des Funktionsprinzips eines beispielhaften erfindungsgemäßen Verfahrens;
- Fig. 9: zeigt ein schematisches Blockdiagramm, das die Umsetzung der beiden analogen Signale s1(t) und s2(t) in entsprechende digitale Signale s1d und s2d zeigt;
- Fig. 10: zeigt ein schematisches Blockdiagramm einer Ausführungsform einer Signalverarbeitungsschaltung, gemäss Erfindung;
- Fig. 11: zeigt ein schematisches Amplituden-Zeit-Diagramm in dem zwei erfindungsgemäße Signale dargestellt sind, um die Anwendung von Kriterien gemäss einer weiteren Ausführungsform beschreiben zu können;
- Fig. 12: zeigt ein schematisches Amplituden-Zeit-Diagramm in dem zwei erfindungsgemäße Signale dargestellt sind, um die Anwendung von Kriterien gemäss einer weiteren Ausführungsform beschreiben zu können.

Im Folgenden werden vorteilhafte Ausführungsformen der Erfindung beschrieben, wobei es sich um beispielhafte Ausführungsformen handelt. Diese umfassen sowohl verschiedene Ausbildungen der Gesamterfindung, als auch Baugruppen und Einzelteile der Erfindung. Grundsätzlich lassen sich die beschriebenen Baugruppen und Einzelteile der verschiedenen Ausführungsformen miteinander kombinieren, respektive die Baugruppen und Einzelteile einzelner Ausführungsformen lassen sich durch die Baugruppen und Einzelteile anderer Ausführungsformen ersetzen. Die hierbei gebildeten Kombinationen können kleinere, jedem Fachmann geläufige und daher nicht weiter beschriebene Anpassungen bedingen, zum Beispiel um ein Zusammenwirken oder Ineinandergreifen der Baugruppen und Einzelteile zu ermöglichen.

Der Begriff Phasengrenze wird verwendet für Grenzen zwischen zwei oder mehr Medien, die unterschiedliche Dielektrizitätskonstanten besitzen. Speziell geht es um Flüssig-Flüssig und Gas-Flüssig Phasengrenzen.

Der Begriff Modul wird hier verwendet, um eine Funktionsgruppe zu umschreiben, die in Hardware, Software oder als Kombination aus Hard- und Software realisiert ist.

Der Begriff "Kennung" wird hier verwendet für einen Code, ein Codewort, ein Signal, eine Speichereintragung oder ein Flag, das gesetzt wird.

Im Zusammenhang mit der vorliegenden Erfindung ist verschiedentlich von Laborgeräten 100 die Rede. Es handelt sich um Geräte, Systeme, Anlagen, Apparate, Handhabungszentren und dergleichen, die mit Mitteln zur Ermittlung einer Phasengrenze ausgestattet sind. Die erfindungsgemässe Vorrichtung 110 ist ein Element oder eine Komponente eines solchen Laborgeräts 100. Ein Laborgerät 100 kann zum Beispiel mehrere identische Vorrichtungen 110 oder mehrere verschiedene Vorrichtungen 110 umfassen.

Die erfindungsgemässe Vorrichtung 110 ist speziell zum Detektieren eines Flüssigkeitsniveaus (d.h. einer Gas-Flüssig-Phasengrenze) in einem Flüssigkeitsbehälter 5 ausgelegt. Diese Vorrichtung 110 lässt sich aber auch zum Ermitteln anderer Phasengrenzen einsetzen. Zum Zweck des Detektierens umfasst sie einen Fühler 3 (z.B. in Form einer Pipettenspitze oder Nadel), der in Richtung der Flüssigkeit 1 im Flüssigkeitsbehälter 5 zustellbar ist. Es wird eine Schaltung 13 mit den Schaltungsblöcken 2, 7 und einem Controllermodul 8 eingesetzt, die ein Ausgangssignal s(t) des Fühlers 3 verarbeitet, um eine Kapazitätsänderung beim Erreichen oder Durchstossen der Phasengrenze zu detektieren. Die Schaltung 13 umfasst mindestens einen ersten Kanal mit einem ersten Filter, um ein erstes Signal s1(t) mit kurzer Pulsweite aus dem Ausgangssignal s(t) heraus zu filtern, und einen zweiten Kanal mit einem zweiten Filter, um ein zweites Signal s2(t) mit grösserer Pulsweite aus dem Ausgangssignal s(t) heraus zu filtern. Weiterhin ist ein Controllermodul 8 von der Schaltung 13 umfasst. Dieses Controllermodul 8 weist ein Komparatormodul auf, das so ausgelegt ist, dass ermittelbar ist, ob das erste Signal s1(t) einen ersten Schwellwert T1 erreicht. Der erste Schwellwert T1 wird von der Vorrichtung 110 oder dem Laborgerät 100 vorgegeben. Zusätzlich zu dem ersten Schwellwert T1 kann auch die Pulsweite P1 ermittelt und/oder ausgewertet werden. Ausserdem weist das Controllermodul 8 ein Verarbeitungsmodul auf, das so ausgelegt ist, dass ermittelbar ist, ob das zweite Signal s2(t) mindestens ein vorgegebenes zweites Signalkriterium (z.B. eine Mindeststeigung ST) erfüllt.

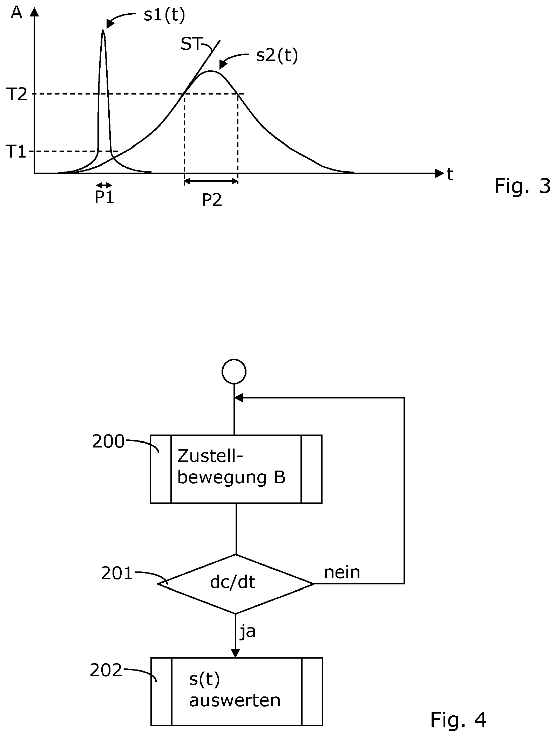

In Fig. 3 ist ein schematisches Amplituden-Zeit-Diagramm gezeigt, in dem zwei erfindungsgemäße Signale s1(t) und s2(t) in vereinfachter Form dargestellt sind. Anhand dieser beispielhaften Darstellung wird die grundlegende Funktionsweise der verschiedenen Ausführungsformen beschrieben. Durch ein Aufspalten des Signals s(t) mittels zweier Filter in ein erstes Signal s1(t) und ein zweites Signal s2(t) wird eine sehr viel genauere Aussage ermöglicht. Trotzdem ist es weiterhin möglich, aufgrund des ersten Signals s1(t) unmittelbar zu reagieren. Eine solche unmittelbare Reaktion kann notwendig sein, um zum Beispiel nach dem Detektieren eines Signals s(t), das nach einem Eintauchsignal aussieht, einen Stopp der Zustellbewegung B zu bewirken, um nicht mehr als erforderlich einzutauchen. Die Gründe hierfür wurden eingangs beschrieben. Vorzugsweise wird die Eintauchtiefe auf 2 mm festgelegt.

In Fig. 3 ist ein erster Schwellwert T1 bei einer relativ kleinen Amplitude A angesetzt. In der einfachsten Ausführungsform der Erfindung wird nur ermittelt, ob das erste Signal s1(t) diesen ersten Schwellwert T1 erreicht. Falls dies der Fall ist, dann gilt hier das erste Kriterium für eine Detektion als erfüllt.

In Fig. 3 ist ein zweiter Schwellwert T2 bei einer Amplitude A angesetzt, die oberhalb des ersten Schwellwerts T1 liegt. Es wird nun ermittelt, ob das zweite Signal s2(t) mindestens ein vorgegebenes zweites Signalkriterium erfüllt. In der einfachsten Ausführungsform der Erfindung wird nur ermittelt, ob das zweite Signal s2(t) diesen zweiten Schwellwert T2 erreicht. Falls dies der Fall ist, dann gilt hier das zweite Kriterium für eine Detektion als erfüllt.

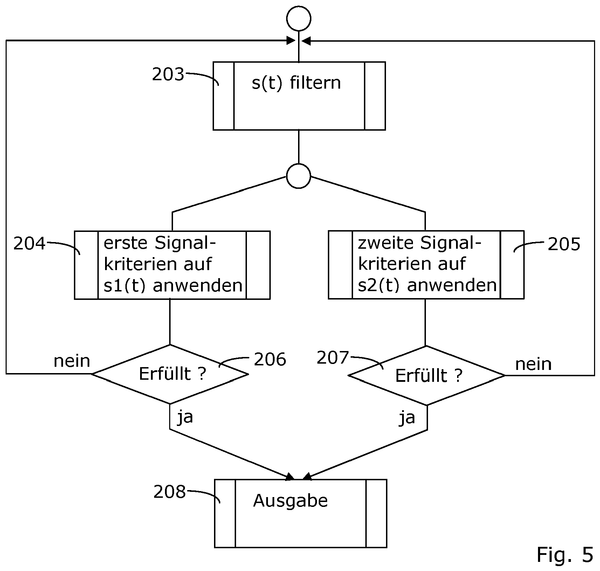

Falls die ersten Signalkriterien und die zweiten Signalkriterien erfüllt sind, wie beschrieben, kann z.B. die Ausgabe (Schritt 208 in Fig. 5) einer Kennung (z.B. in Form eines Signals oder eines Codes) erfolgen. Diese Kennung zeigt an, dass die Vorrichtung 110 eine Detektion eines Flüssigkeitsniveaus vorgenommen hat.

Es ist zu beachten, dass bei den verschiedenen Ausführungsformen der Erfindung die Absolutwerte der beiden Schwellwerte T1 und T2 z.B. von der Wahl der schaltungstechnischen Weiterverarbeitung abhängen. T1 kann kleiner, gleich oder sogar grösser sein als T2. Für eine bessere Übersichtlichkeit ist in den Figuren T2 stets grösser als T1 gewählt.

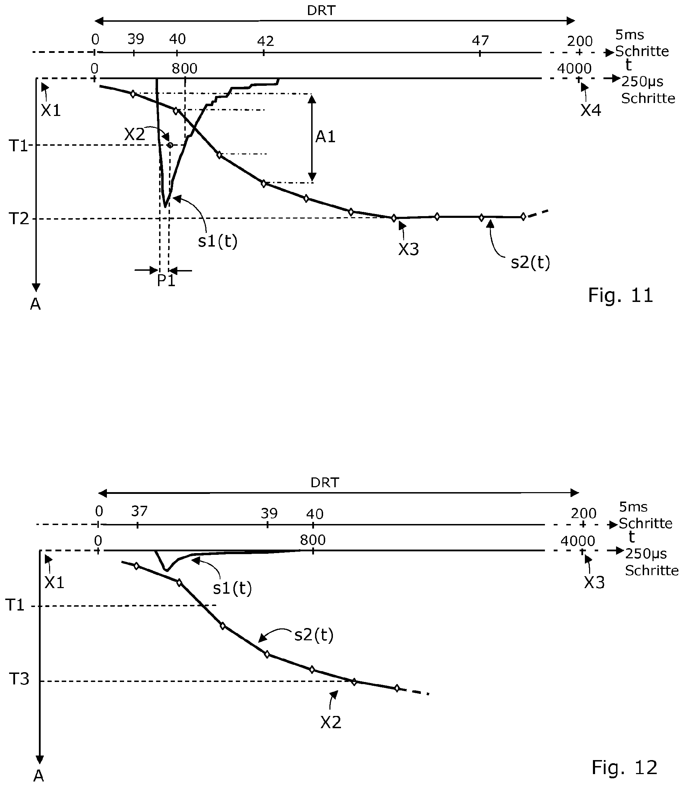

Optional kann bei der Auswertung/Verarbeitung des ersten Signals s1(t) auf der Höhe des ersten Schwellwerts T1 zusätzlich noch die Pulsweite P1 betrachtet werden. In diesem Fall würden die ersten Signalkriterien den ersten Schwellwert T1 und die Pulsweite P1 umfassen. Durch ein oder mehrere zusätzliche Kriterien verringert sich das Risiko von Fehldetektionen, die zum Beispiel aufgrund elektrostatischer Entladungen auftreten können. In Fig. 3 entspricht die Pulsweite P1 der aktuellen Pulsweite des Signals s1(t) auf der Höhe des ersten Schwellwertes T1. Da man in diesem Fall eventuell zu lang warten müsste, bis die gesamte Pulsweite P1 erfasst wurde, wird in bevorzugten Ausführungsformen die Pulsweite P1 als ein kürzeres Zeitfenster angesetzt. In Fig. 11 ist entsprechend ersichtlich, dass ein solches kürzeres Zeitfenster als P1 festgelegt wurde. An dem Punkt X2 endet dieses Zeitfenster.

Bei der Auswertung des ersten Signals s1(t), respektive bei der Definition des oder der ersten Kriterien wird darauf geachtet, dass diese Auswertung möglichst schnell möglich ist, um schnell reagieren zu können.

Optional kann bei der Auswertung/Verarbeitung des zweiten Signals s2(t) auf der Höhe des zweiten Schwellwerts T2 eine oder mehrere der folgenden zusätzlichen zweiten Signalkriterien betrachtet werden:
- Steigung ST des zweiten Signals s2(t) beim Schwellwert T2 oder an einer anderen Stelle des Signals s2(t) und/oder
- Pulsweite P2 des zweiten Signals s2(t) beim Schwellwert T2 oder an einer anderen Stelle des Signals s2(t), und/oder
- monotone Steigung des Signals s2(t) über mehrere Messpunkte oder über ein Zeitfenster hinweg.

Alternativ kann auch die Steigung ST des zweiten Signals s2(t) oder die Pulsweite P2 an einem anderen Punkt (z.B. auf der Höhe vom Schwellwert T1) der Kurve betrachtet und ausgewertet werden.

Die genannten ersten Signalkriterien und zweiten Signalkriterien können bei Bedarf beliebig miteinander kombiniert werden.

Durch eine Berücksichtigung von einem oder mehreren zusätzlichen Signalkriterien kann die Detektionsgenauigkeit verbessert werden.

Anhand der Fig. 4, die ein schematisches Flussdiagramm zeigt, wird das Funktionsprinzip der erfindungsgemäßen Vorrichtung 110 beschrieben. Unter Bezugnahme auf Fig. 5 werden dann weitere Details des Funktionsprinzips der Signalauswertung einer erfindungsgemäßen Vorrichtung 110 erläutert.

Die Vorrichtung 110 wertet das Ausgangssignal s(t) der Schaltung 2 aus, um erkennen zu können, ob sich eine Änderung der relativen Kapazität dc über die Zeit t, respektive eine kleine Zeiteinheit dt, ergibt. Dieser Schritt 201 ist in Fig. 4 durch die Abfrage dc/dt dargestellt. Das Auswerten des Ausgangssignals s(t) ist in Fig. 4 durch den Prozess 202 dargestellt. Diese Auswertung erfolgt während der Fühler 3 zugestellt wird, was in Fig. 4 durch den Prozess 200 dargestellt ist. Die Zustellbewegung B wird fortgesetzt, solange sich keine Änderung der relativen Kapazität dc ergibt. Die Zustellbewegung B kann selbstverständlich von der Vorrichtung 110 oder von dem Laborgerät 100 unterbrochen werden, wenn z.B. eine maximal vorgegebene Eintauchtiefe Z-Max erreicht wurde.

Details eines Verfahrens 202 zur Auswertung des Signals s(t) sind der Fig. 5 zu entnehmen. In einem ersten Schritt 203 wird das Signal s(t) gefiltert, um die genannten beiden Signale s1(t) und s2(t) zu erhalten. Dann werden, vorzugsweise bei allen Ausführungsformen der Erfindung zeitgleich, das/die ersten Signalkriterien auf das erste Signal s1(t) und das/die zweiten Signalkriterien auf das zweite Signal s2(t) angewendet, wie durch die Prozesse 204 und 205 angedeutet. Wenn das/die ersten Signalkriterien erfüllt sind, dann gibt der Entscheidungsprozess 206 ein entsprechendes (Erfolgs-)Signal. Das gleiche gilt für den Entscheidungsprozess 207. Dieser Prozess 207 gibt ein (Erfolgs-)Signal wenn das/die zweiten Signalkriterien erfüllt sind. In diesem Fall kann ein Prozess 208 eine Kennung (z.B. ein Signal oder einen Code) ausgeben. Wenn das/die ersten Signalkriterien nicht erfüllt sind, verzweigt der Prozess zurück zum Anfang. Wenn das/die zweiten Signalkriterien nicht erfüllt sind, verzweigt der Prozess zurück zum Anfang. Falls weder das/die ersten noch das/die zweiten Signalkriterien erfüllt sein sollten, dann verzweigt der Prozess auch zurück zum Anfang. Der Durchlauf kann je nach Ausführungsform mehrfach wiederholt werden.

Das erfindungsgemässe Verfahren zum Detektieren einer Phasengrenze in einem Flüssigkeitsbehälter 5 verläuft somit wie folgt. Es wird eine kontinuierliche oder schrittweise Zustellbewegung B (Prozess 200) ausgeführt, um den Fühler 3 in Richtung der Flüssigkeit 1 im Flüssigkeitsbehälter 5 zuzustellen. Während dieses Zustellens B erfolgt das Auswerten 202 des Ausgangssignals s(t) des Fühlers 3, um eine Kapazitätsänderung dc/dt zu detektieren. Beim Auswerten 202 wird das Ausgangssignal s(t) mittels eines ersten Filters und eines zweiten Filters aufgetrennt (Prozess 203). Das Filtern der Signale kann auch in einem gemeinsamen Filtermodul realisiert sein. Daraus resultieren ein erstes Signal s1(t) mit kurzer Pulsweite und ein zweites Signal s2(t) mit grösserer Pulsweite.

Es wird dann ermittelt (Prozesse 204, 206), ob das erste Signal s1(t) dem/den vorgegebenen ersten Signalkriterien (z.B. Schwellwert T1; oder Schwellwert T1 und Pulsweite P1) entspricht. Ausserdem wird ermittelt (Prozesse 205, 207), ob das zweite Signal s2(t) dem/den vorgegebenen zweiten Signalkriterien (z.B. Schwellwert T2; oder Schwellwert T2 und Pulsweite P2; oder Schwellwert T2 und Steigung ST) entspricht. Falls das/die ersten Signalkriterien und das/die zweiten Signalkriterien erfüllt sind, erfolgt die Ausgabe (Prozess 208) einer Kennung (z.B. ein Signal oder ein Code), die eine Detektion einer Phasengrenze darstellt oder anzeigt.

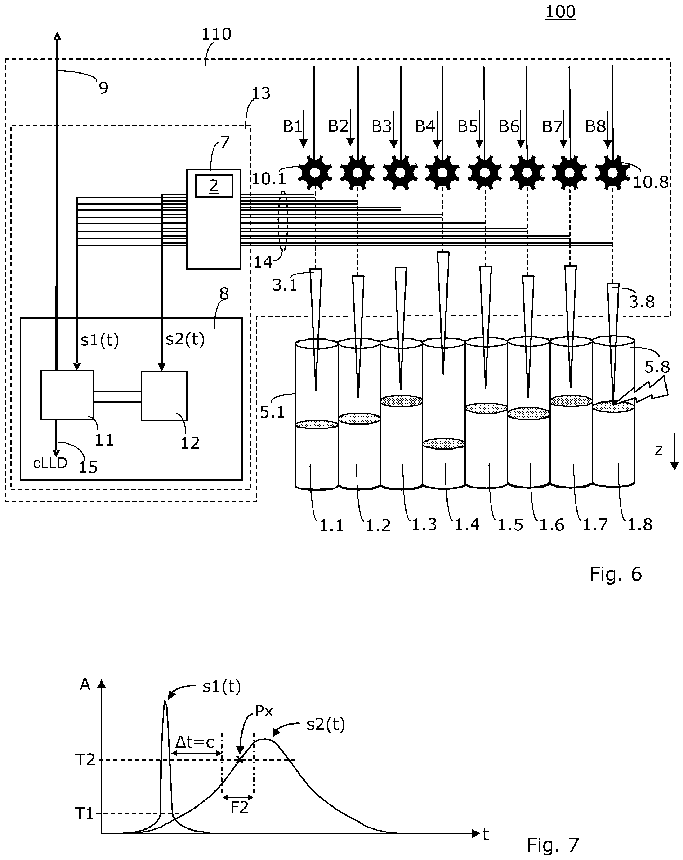

In Fig. 6 ist eine schematische Seitenansicht einer weiteren erfindungsgemäßen Vorrichtung 110 mit einer weiteren erfindungsgemäßen Schaltung gezeigt. Die bisher beschriebenen Details lassen sich auf diese Ausführungsform übertragen. Daher werden im Folgenden hauptsächlich die Unterschiede zu der Vorrichtung 110 nach Fig. 2 beschrieben. Das Laborgerät 100 umfasst hier mehrere Kanäle (hier acht Kanäle). Jeder Kanal weist Zustellmittel 10.1 - 10.8 auf, die hier vereinfacht durch Zahnräder dargestellt sind. Die Zustellmittel 10.1 - 10.8 erzeugen eine entsprechende Zustellbewegung B1 - B8, wie durch Pfeile angedeutet, die abwärts weisen. Durch die Zustellmittel 10.1 - 10.8 werden die Fühler 3.1 - 3.8 einzeln oder gemeinsam zugestellt. Dabei tauchen die Fühler 3.1 - 3.8 in Flüssigkeitsbehälter 5.1 - 5.8, die allesamt mit Flüssigkeiten 1.1 - 1.8 gefüllt sind. Die jeweiligen Phasengrenzen sind durch graue Flächen angedeutet. Im gezeigten Moment taucht soeben der Fühler 3.8 in die Flüssigkeit 1.8 des Flüssigkeitsbehälters 5.8. Die relative Kapazitätsänderung, die sich im achten Kanal der Vorrichtung 110 ergibt, ist hier durch ein Blitzsymbol dargestellt. Die Fühler 3.1 - 3.8 der einzelnen Kanäle sind über Leitungen 14 (vorzugsweise abgeschirmte Leitungen) mit der Signalverarbeitungsschaltung 7 verbunden. Diese Signalverarbeitungsschaltung 7 verarbeitet die Signale s(t) der einzelnen Kanäle separat. Jedes Signal s(t) eines jeden Kanals wird gefiltert, um dann entsprechende erste und zweite Signale s1(t) und s2(t) zu erhalten. D.h. insgesamt erhält man acht erste Signale s1(t) und acht zweite Signale s2(t) pro Messzyklus. Die Fühler 3.1 - 3.8 werden mit einer geeigneten Frequenz geladen und entladen.

Die Vorrichtung 110 umfasst ein Controllermodul 8, wie gezeigt. Das Controllermodul 8 umfasst ein Komparatormodul, das hier bei dieser Ausführungsform durch einen 1. Mikroprozessor 11 realisiert ist. Das Komparatormodul ist so ausgelegt, respektive der 1. Mikroprozessor 11 ist so programmiert, dass es/er ermittelt, ob die ersten Signale s1(t) der einzelnen Kanäle erste Schwellwerte T1 erreichen. Dieses Prinzip wurde bereits zuvor beschrieben. Hier verarbeitet das Komparatormodul, respektive der 1. Mikroprozessor 11 jedoch alle ersten Signale s1(t) der acht Kanäle gestaffelt hintereinander.

Das Controllermodul 8 umfasst weiterhin ein Verarbeitungsmodul, das hier bei dieser Ausführungsform durch einen 2. Mikroprozessor 12 realisiert ist. Das Verarbeitungsmodul ist so ausgelegt, respektive der 2. Mikroprozessor 12 ist so programmiert, dass es/er ermittelt, ob die zweiten Signale s2(t) vorgegebene zweite Signalkriterien erfüllen. Dieses Prinzip wurde bereits zuvor beschrieben. Hier verarbeitet das Verarbeitungsmodul, respektive der 2. Mikroprozessor 12 jedoch alle zweiten Signale s2(t) der acht Kanäle gestaffelt. Wenn für einen der acht Kanäle beide Signale s1(t) und s2(t) die Kriterien erfüllen, dann wird davon ausgegangen, dass bei diesem Kanal der Fühler 3 die Phasengrenze zur Flüssigkeit 1 erreicht hat. Im vorliegenden Fall würde für den achten Kanal eine Kennung (z.B. in Form eines Signals oder Codes) ausgegeben werden, weil der Fühler 3.8 soeben in die Flüssigkeit 1.8 im Behälter 5.8 eingetaucht ist. Diese Kennung kann z.B. über eine Schnittstelle (cLLD) 15 ausgegeben werden. Anhand dieser Kennung kann z.B. das Laborgerät 100 Entscheidungen treffen, Reaktionen auslösen oder dergleichen.

Statt der beiden getrennten Mikroprozessoren 11 und 12, kann bei den verschiedenen Ausführungsformen auch ein gemeinsamer, sehr leistungsstarker Prozessor zum Einsatz kommen.

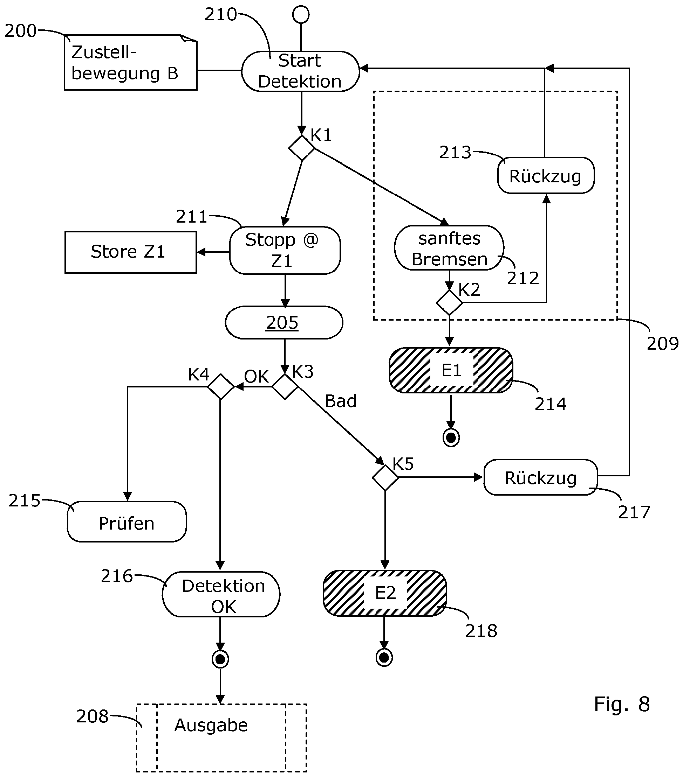

Vorzugsweise werden bei den verschiedenen Ausführungsformen der Erfindung Entscheidungen durch eine geeignete Software getroffen. Zu diesem Zweck übernimmt die Software Informationen (z.B. die erwähnte Kennung von dem Controllermodul 8 und Signal-Werte aus einem Speicher). Anhand von Regeln, die vorgegeben sind, können dann Entscheidungen getroffen werden. So kann die Software z.B. entscheiden, ob ein Fühler 3 (z.B. in Form einer Nadel oder Pipettenspitze) gewaschen werden soll, z.B. weil er gemäss Erfindung (siehe z.B. Prozess 214 oder 218 in Fig. 8) als kontaminiert gekennzeichnet wurde. Die Software kann auch entscheiden, ob ein Kanal abgeschaltet werden soll, oder ob in einem Notfall z.B. Bedienpersonal gerufen werden soll.

In Fig. 6 ist angedeutet, dass die Schaltung 7 eine elektronische Lade-/Entlade-Schaltung 2 umfassen kann. Die elektronische Lade-/Entlade-Schaltung 2 kann aber auch an einem anderen Ort angesiedelt sein. Ausserdem hängt die Ausführung dieser Schaltung 2 davon ab, welches der eingangs beschriebenen kapazitiven Messverfahren konkret zur Anwendung kommt.

In Fig. 7 ist ein weiteres schematisches Amplituden-Zeit-Diagramm gezeigt, in dem zwei erfindungsgemäße Signale s1(t) und s2(t) in vereinfachter Form dargestellt sind. Anhand dieser beispielhaften Darstellung wird die grundlegende Funktionsweise einer weiteren Ausführungsform beschrieben. Es erfolgt auch hier ein Aufspalten des Signals s(t) mittels eines gemeinsamen oder mittels zweier Filtermodule in ein erstes Signal s1(t) und ein zweites Signal s2(t).

In Fig. 7 wird wiederum ein erster Schwellwert T1 bei einer relativ kleinen Amplitude A angesetzt. In der einfachsten Ausführungsform der Erfindung wird nur ermittelt, ob das erste Signal s1(t) diesen ersten Schwellwert T1 erreicht. Falls dies der Fall ist, dann gilt hier das erste Kriterium für eine Detektion als erfüllt.

In Fig. 7 ist ein zweiter Schwellwert T2 bei einer Amplitude A angesetzt, die oberhalb des ersten Schwellwerts T1 liegt. Es wird nun ermittelt, ob das zweite Signal s2(t) ein vorgegebenes zweites Signalkriterium erfüllt. In der einfachsten Ausführungsform der Erfindung wird nur ermittelt, ob das zweite Signal s2(t) innerhalb eines Zeitfensters F2 diesen zweiten Schwellwert T2 überschreitet. Das Zeitfenster F2 beginnt nach einer Verzögerung Δt=c. Im gezeigten Beispiel überschreitet das zweite Signal s2(t) den Schwellwert T2 an dem mit einem "x" gekennzeichneten Schnittpunkt Px. Da dieser Schnittpunkt Px im Zeitfenster F2 liegt, gilt hier das zweite Kriterium für eine Detektion als erfüllt.

Falls das/die ersten Signalkriterien und das/die zweiten Signalkriterien erfüllt sind, wie beschrieben, kann z.B. die Ausgabe (Schritt 208 in Fig. 5) einer Kennung (z.B. in Form eines Signals oder Codes) erfolgen und es kann zum Beispiel die Abwärtsbewegung gestoppt werden. Diese Kennung zeigt an, dass die Vorrichtung 110 eine Detektion einer Phasengrenze vorgenommen hat.

Ein weiteres beispielhaftes erfindungsgemässes Verfahren verläuft wie in Fig. 8 dargestellt. Es wird eine Zustellbewegung B ausgeführt (Prozess 200). Hierbei führt der entsprechende Fühler 3 eine Bewegung aus, die an einer Startposition (Z-Start) beginnt und spätestens an einer maximalen (Eintauch-) Position (Z-Max) endet. Es kann hier ein Bewegungsprofil vorgegeben werden, oder die Bewegung verläuft gleichmässig mit konstanter Geschwindigkeit. Vorzugsweise kommen Mittel zum Einsatz, um stets die absolute z-Position des Fühlers 3 feststellen zu können. Dadurch kann ein Einhalten des Bereichs Z-Start bis Z-Max sichergestellt werden.

Der Prozess 210 zeigt an, dass hier die Detektion eines Flüssigkeitsniveaus (LLD) gestartet wird. Am Knoten K1 wird entschieden, ob ein schnelles Signal s1(t) detektiert wurde. Falls dies der Fall ist, so erfolgt eine Verzweigung des Verfahrens in Richtung des Prozesses 211. Der Prozess 211 bewirkt das sofortige Stoppen der Zustellbewegung B bei der gegenwärtigen Tauchposition Z1 (submerge Position, z.B. 2 mm unterhalb der Phasengrenze) und es folgt der Prozess 205 zum Auswerten des langsamen Signals s2(t). Falls am Knoten K1 nur ein langsames Signal s2(t) detektiert wird, verzweigt das Verfahren in Richtung des Prozesses 212. Dieser Prozess 212 wird als Soft Stopp ("sanftes Bremsen") bezeichnet. In diesem Fall soll keine abrupte Stoppbewegung vorgenommen werden. Am Knoten K2 wird entschieden oder überprüft, ob es sich um eine einmalige Detektion nur eines langsamen Signals s2(t) handelt. Es handelt sich hier vorzugsweise bei dem Knoten K2 um einen Zähler. In diesem Fall kommt der Prozess 213 zur Anwendung. Der Prozess 213 gibt vor, dass der Fühler 3 um einen kleinen Betrag in die vorherige Position zurückgezogen wird. Dann wird das Verfahren 210 erneut ausgeführt. Falls wiederum nur ein langsames Signal s2(t) detektiert wird, verzweigt das Verfahren erneut von K1 zum Prozess 212. Am Knoten K2 verzweigt das Verfahren dann zu einem Prozess 214. Der Prozess 214 gibt einen Fehler E1 (z.B. in Form eines Fehler-Codes) aus. Als Teil des Prozesses 214 können optional z.B. auch die ermittelten Daten in einem Speicher abgelegt werden und/oder die Probenflüssigkeit 1 in dem entsprechenden Flüssigkeitsbehälter 5 und/oder der Fühler 3 kann markiert und übersprungen (oder abgeschaltet) werden. Die Prozesse 212 und 213 sind Teil eines Spezial-Prozesses oder -Ablaufs, der auf Situationen ausgelegt ist, wo nur zweite langsame Signale s2(t) detektiert werden.

Wenn man dem Hauptpfad des Verfahrens von K1 über den Prozess 211 und 205 folgt, dann erfolgt am Knoten K3 die Entscheidung, ob sowohl das/die ersten Kriterien durch das erste schnelle Signal s1(t) als auch das/die zweiten Kriterien durch das langsame zweite Signal s2(t) erfüllt sind. Falls dies der Fall ist, verzweigt das Verfahren am Knoten K3 in Richtung "OK". Am Knoten K4 wird abgefragt, ob der Fühler 3 in irgendeiner Form gekennzeichnet wurde. Eine solche Kennzeichnung des Fühlers 3 kann in einem anderen vorausgehenden Prozess erfolgt sein. So kann der Fühler 3 z.B. als kontaminiert gekennzeichnet worden sein. In diesem Fall verzweigt das Verfahren am Knoten K4 in Richtung des Prozesses 215. Der Prozess 215 kann z.B. eine (manuelle oder automatische) Prüfung des Fühlers 3 vorsehen. Falls der Fühler 3 nicht gekennzeichnet worden ist, endet das Verfahren mit einer erfolgreichen Detektion (Prozess 216) und das Verfahren kann optional in den Prozess 208 (siehe auch Fig. 5) münden.

Falls am Knoten K3 die Entscheidung nicht OK ist, verzweigt das Verfahren am Knoten K3 in Richtung eines Knotens K5. Der Knoten K5 kann als Zähler ausgelegt sein. Falls das Verfahren nach Fig. 8 ein- oder zweimal nacheinander am Knoten K3 in Richtung Knoten K5 verzweigt ist, folgt der Prozess 217. Wie beim Prozess 213, oder in einer anderen Art und Weise, kann hier ein definierter Rückzug des Fühlers 3 erfolgen und das Verfahren wird ab dem Prozess 210 wiederholt. Falls das Verfahren z.B. dreimal nacheinander am Knoten K3 in Richtung Knoten K5 verzweigt ist, kann durch einen Prozess 218 ein Fehler E2 ausgegeben werden. Der Prozess 218 gibt einen Fehler E2 (z.B. in Form eines Fehler-Codes) aus. Als Teil des Prozesses 218 können optional z.B. auch die ermittelten Daten in einem Speicher abgelegt werden und/oder die Probenflüssigkeit 1 in dem entsprechenden Flüssigkeitsbehälter 5 und/oder der Fühler 3 kann markiert und übersprungen (oder abgeschaltet) werden.

Das Flussdiagramm nach Fig. 8 ist als Beispiel zu verstehen. Je nach Laborgerät 100, Messverfahren und Situation kann das gezeigte Verfahren modifiziert werden. Es können z.B. auch weitere Verzweigungen und Routinen vorgesehen sein, um Sonderfälle zu behandeln.

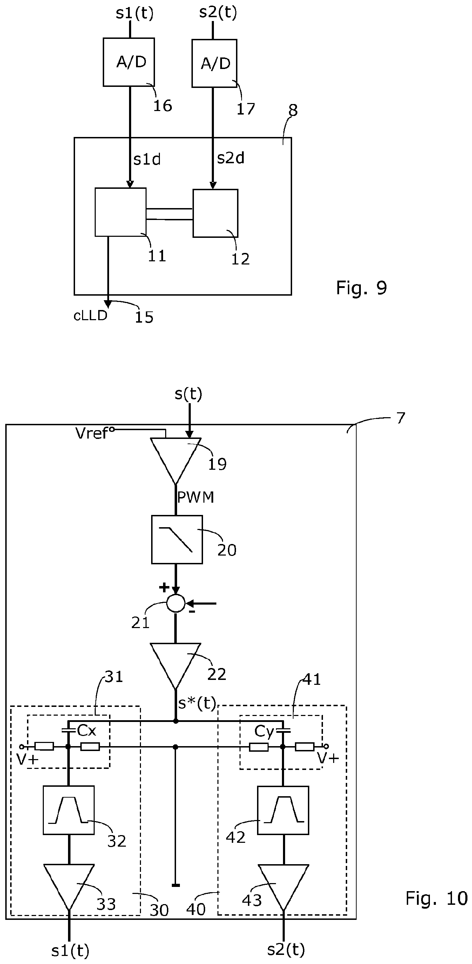

Die erfindungsgemässe Vorrichtung 100 ist vorzugsweise mit zwei Mikroprozessoren 11 und 12 ausgestattet, wie in Fig. 6 gezeigt. Ein Teil der Signalverarbeitung des Signals s(t) erfolgt vorzugsweise bei allen Ausführungsformen der Erfindung analog. Vorzugsweise ist die Signalverarbeitung bis und mit den beiden Filtermodulen zum Bereitstellen der Signale s1(t) und s2(t) analog ausgeführt. Die Umsetzung ins Digitale erfolgt dann durch zwei getrennte Analog-Digital-Wandler 16, 17, die vor den Mikroprozessoren 11 und 12 angeordnet sind, wie in Fig. 9 in einem schematischen Blockdiagramm angedeutet. Diese Analog-Digital-Wandler 16, 17 erzeugen aus dem analogen ersten Signal s1(t) ein erstes digitalisiertes Signal s1d und aus dem analogen zweiten Signal s2(t) ein zweites digitalisiertes Signal s2d. Diese Signale s1d und s2d werden dann von dem Controllermodul 8 verarbeitet. Falls die Vorrichtung 110, respektive das Laborgerät 100 mehrere Kanäle aufweist, so sind die Analog-Digital-Wandler 16, 17 entsprechend ausgelegt.

In Fig. 10 ist ein schematisches Blockdiagramm einer Ausführungsform einer Signalverarbeitungsschaltung 7, gemäss Erfindung, gezeigt. Diese Schaltung 7 verarbeitet das Signal s(t), das an dem Fühler 3 abgegriffen wird. Zwischen dem Fühler 3 und der Schaltung 7 kann optional noch die Schaltung 2 angeordnet sein, je nach Messverfahren und Gesamtkonzept der Vorrichtung 110. Die Schaltung 7 übernimmt vorbereitende Aufgaben für das Auswerten (Prozess 202) des Ausgangssignals s(t). Dazu gehört das Auftrennen (Prozess 203) des Ausgangssignals s(t) mittels eines ersten Filtermoduls 30 und eines zweiten Filtermoduls 40 in ein erstes Signal s1(t) mit kurzer Pulsweite und ein zweites Signal s2(t) mit grösserer Pulsweite, wie bereits erwähnt. Vor dieser Auftrennung (Prozess 203) wird das Signal s(t) vorzugsweise vorbehandelt. Hier kann zum Beispiel ein Vergleicher (Comparator) 19 eingesetzt werden, der das Signal s(t) zu einer Referenzspannung Vref in Bezug setzt. Am Ausgang des Vergleichers 19 liegt ein PWM (Puls-Weiten moduliertes) Signal vor. Das PWM Signal zeigt eine Abhängigkeit von der momentanen Kapazität am Fühler 3. Dieses PWM Signal wird durch ein Filtermodul 20 (z.B. einen Bessel-Filter 3ter Ordnung) verarbeitet. Dann kann eine Offset-Verschiebung statt finden, wie durch das Symbol mit dem Bezugszeichen 21 dargestellt. Abschliessend folgt vorzugsweise ein Hauptverstärker 22. Am Ausgang des Hauptverstärkers 22 liegt ein Signal an, das hier als verstärktes Signal s*(t) bezeichnet wird. Dieses verstärkte Signal s*(t) wird nun über zwei parallele Filtermodule 30 und 40, geführt. Beide Filtermodule 30 und 40 umfassen hier (vom Eingang zum Ausgang betrachtet): einen Entkoppler 31 bzw. 41; einen Bandpassfilter 32 bzw. 42; einen Nachverstärker 33 bzw. 43. Der 1. Entkoppler 31 umfasst eingangsseitig einen Kondensator Cx und der 2. Entkoppler 41 umfasst eingangsseitig einen Kondensator Cy. Die beiden Entkoppler 31 bzw. 41 sind so ausgelegt, dass sie eine Wechselspannungsentkopplung bewirken. Zu diesem Zweck umfassen beide je einen Spannungsteiler mit zwei Widerständen, wie gezeigt. Der 1. Bandpassfilter 32 ist z.B. durch die beiden Frequenzen f1 = 60 Hz und f2 = 1,8 kHz charakterisiert. Der 1. Nachverstärker 33 kann zum Beispiel einen Verstärkungsfaktor zwischen 10 und 20 haben. Der 2. Bandpassfilter 42 ist z.B. durch die beiden Frequenzen f1 = 2,5 Hz und f2 = 18 Hz charakterisiert. Der 2. Nachverstärker 43 kann zum Beispiel einen Verstärkungsfaktor zwischen 11 und 15 haben.

Die Schaltung nach Fig. 9 kann z.B. auf die Schaltung nach Fig. 10 folgen.

Vorzugsweise erfolgt mindestens ein Teil der Ablaufsteuerung des erfindungsgemässen Verfahrens durch Software. Diese Software kann in Form von Firmware vorgegeben werden. Vorzugsweise wird aber nicht nur die Ablaufsteuerung durch Software realisiert, sondern auch die Signalverarbeitung und -auswertung. In diesem Fall sind die entsprechenden Module z.B. durch leistungsstarke Prozessoren mit Software implementiert.

Die Ablaufsteuerung sieht bei den verschiedenen Ausführungsformen jeweils vor, dass die Zustellbewegung B in Richtung der Z-Achse beim Erreichen einer Phasengrenze (Stopp @ Z1, siehe Fig. 8) gestoppt wird. D.h. wenn die Detektion des ersten Signals s1(t) oder s1d erfolgreich ist (siehe Prozess 211), dann bewirkt die Ablaufsteuerung (Prozess 211) vorzugsweise einen sofortigen Stopp der Zustellbewegung B des entsprechenden Fühlers 3. Durch den Prozess 211 wird der Fühler 3 sofort gestoppt, um zu verhindern, dass der Fühler 3 weiter eintaucht als unbedingt notwendig. In dieser Position Z1 wartet die Vorrichtung 110 darauf, dass ermittelt wird, ob auch das zweite Signal s2(t) oder s2d erfolgreich ermittelt wurde. Wenn auch das/die zweiten Kriterien für das zweite Signal s2(t) oder s2d erfüllt sind, wird die Detektion insgesamt als erfolgreich angesehen (Prozess 216).

Das Erzeugen der Kennung (siehe Prozess 208) kann durch den 2. Mikroprozessor 12 vorgenommen werden, oder es kann ein übergeordneter Prozessor (nicht gezeigt) eingesetzt werden. Dieser übergeordnete Prozessor kann z.B. auch andere Aufgaben übernehmen.

Vorzugsweise umfasst die Vorrichtung 110 einen Bus 9 (z.B. einen Controller-Area Network Bus; CAN Bus), oder die Vorrichtung 110 kann mit einem solchen Bus 9 verbunden sein.

Bevor ein Detektionsverfahren gemäss Erfindung zur Anwendung kommt, bzw. bevor die Vorrichtung 110 eingesetzt wird, wird vorzugsweise eine Reihe von Parametern vorgegeben. Es kann einer oder es können mehrere der folgenden Parameter definiert werden (je nach Ausführungsform und Anwendungsfall):
- Einstellen der Empfindlichkeit (z.B. je nach Flüssigkeit, die zu detektieren ist);
- Festlegen des/der ersten und/oder zweiten Kriterien;
- Vorgeben, ob ein spezieller Prozess (z.B. Prozess 209 in Fig. 8) oder Detektionsmodus zum Einsatz kommen soll. Gegebenenfalls wird für einen oder mehrere der Knoten vorgeben, wie häufig der Versuch wiederholt werden soll. In der Beschreibung von Fig. 8 wurde am Knoten K2 nur eine einzige Wiederholung vorgesehen. Diese Zahl kann z.B. auch anders gewählt werden.
- Vorgeben eines Bewegungsprofils (z.B. mit Rampe) für die Zustellbewegung B;
- Festlegen von Reaktionen (z.B. Reaktion auf erfolgreiche Detektion; Prozess 216).

Es handelt sich hier nur um Beispiele. Die obige Liste kann erweitert werden. Es können auch Aspekte für die Nachbearbeitung nach einer Detektion festgelegt werden.

In Fig. 11 ist ein weiteres Amplituden-Zeit-Diagramm gezeigt, in dem zwei erfindungsgemäße Signale s1(t) und s2(t) einer konkreten Flüssigkeitsdetektion dargestellt sind. Anhand dieser Darstellung werden nun Aspekte weiterer Ausführungsformen beschrieben.

In Fig. 11 ist ein erster Schwellwert T1 bei einer relativ kleinen Amplitude A angesetzt. In der einfachsten Ausführungsform der Erfindung wird nur ermittelt, ob das erste Signal s1(t) diesen ersten Schwellwert T1 erreicht. Falls dies der Fall ist, dann gilt hier das erste Kriterium für eine Detektion als erfüllt. Optional kann hier und auch bei allen anderen Ausführungsformen noch die Pulsweite P1 und/oder ein beliebiges anderes geeignetes Kriterium als erstes Kriterium ausgewertet und berücksichtig werden. In einer bevorzugten Ausführungsform ist die Pulsweite P1 als ein kürzeres Zeitfenster angesetzt, wie in Fig. 11. In der Fig. 11 ist entsprechend ersichtlich, dass ein solches kürzeres Zeitfenster als P1 festgelegt wurde. An dem Punkt X2 endet dieses Zeitfenster. Innerhalb dieses Zeitfensters wird betrachtet, ob das Signal s1(t) immer oberhalb des Schwellenwertes T1 bleibt. Falls dies der Fall ist, dann ist auch dieses Kriterium erfüllt.

Es ist auch möglich, zu betrachten, ob das Signal s1(t) innerhalb eines solchen Zeitfensters ein Maximum hat. In Fig. 11 wäre auch diese Bedingung, respektive dieses Kriterium erfüllt.

In Fig. 11 ist ein zweiter Schwellwert T2 bei einer Amplitude A angesetzt, die im vorliegenden Beispiel oberhalb (wenn die Absolutwerte betrachtet werden) des ersten Schwellwerts T1 liegt. Es wird nun ermittelt, ob das zweite Signal s2(t) ein vorgegebenes zweites Signalkriterium erfüllt. In der einfachsten Ausführungsform der Erfindung wird nur ermittelt, ob das zweite Signal s2(t) diesen zweiten Schwellwert T2 erreicht. Falls dies der Fall ist, dann gilt hier das zweite Kriterium für eine Detektion als erfüllt.

Falls das/die ersten Signalkriterien und das/die zweiten Signalkriterien erfüllt sind, wie beschrieben, kann z.B. die Ausgabe (Schritt 208 in Fig. 5 oder Fig. 8) einer Kennung (z.B. in Form eines Signals oder Codes) erfolgen. Diese Kennung zeigt an, dass die Vorrichtung 110 eine Detektion einer Grenzfläche vorgenommen hat.

Der Ablauf des erfindungsgemässen Verfahrens kann wie folgt ablaufen. An einem Punkt X1 wird das Detektionsverfahren gestartet (Prozess 210). Die entsprechenden Speicher oder Register der Vorrichtung 110 oder des Laborgeräts 100 werden zu Null gesetzt. Alle 250 µs wird in diesem Beispiel ein neuer schneller A/D Wert (hier auch digitales Signal s1d genannt) gelesen und es wird das erste Kriterium geprüft. Hier wird mindestens geprüft, ob das Signal s1(t), respektive das entsprechende digitale Signal s1d, den Schwellenwert T1 erreicht hat. Optional werden hier weitere erste Kriterien (z.B. Pulsweite P1 und/oder Steigung ST usw.) überprüft. Während dieses Vorgangs wird ein entsprechender schneller Pufferspeicher (z.B. ein Schieberegister) mit dem digitalen Signal s1d gefüllt. Alle 5 ms wird in diesem Beispiel parallel ein neuer langsamer A/D Wert (hier auch digitales Signal s2d genannt) gelesen und es wird das zweite Kriterium, respektive die zweiten Kriterien, geprüft. Hier wird mindestens geprüft, ob das Signal s2(t), respektive das entsprechende digitale Signal s2d, den Schwellenwert T2 erreicht hat. Optional werden hier weitere zweite Kriterien (z.B. Pulsweite P2 und/oder Steigung ST) überprüft. Während dieses Vorgangs wird ein entsprechender weiterer Pufferspeicher (z.B. ein Schieberegister) mit dem digitalen Signal s2d gefüllt.

An einem Punkt X2 wurde festgestellt, dass auch ein weiteres Kriterium für die Detektion des schnellen Signals s1(t) oder s1d erfüllt ist (Prozess 206). Es wird dann ein Stopp-Signal gesendet (Prozess 211; Stopp @ Z1), um die Zustellbewegung (vorübergehend) bei der Position Z1 zu stoppen. Der entsprechende Amplitudenwert des schnellen Signals s1(t) oder s1d wird nun in dem schnellen Pufferspeicher definiert oder markiert. Ab dem entsprechenden Speicherplatz kann z.B. der Rest des schnellen Pufferspeichers überschrieben werden. Die Werte des langsamen Signals s2(t) oder s2d können in dem weiteren Pufferspeicher definiert oder markiert werden. Ab diesem Speicherplatz kann z.B. der Rest des weiteren Pufferspeichers überschrieben werden. Zu diesem Zeitpunkt kann ein optionaler Wert oder ein Flag auf "Detection ongoing" gesetzt werden. In Fig. 8 befindet sich das Verfahren jetzt im Bereich der Prozesse 211, 205 und des Knotens K3.

Das langsame Signal s2(t) oder s2d wurde ausgewertet (Prozess 205), wie beschrieben, um festzustellen, ob auch das/die Kriterien für das zweite langsame Signal s2(t) oder s2d erfüllt sind. Am Punkt X3 überschreitet das langsame Signal s2(t) oder s2d den Schwellwert T2. Am Punkt X4 kann das Detektionsverfahren als abgeschlossen betrachtet werden.

Durch den Doppelpfeil A1 ist in Fig. 11 ein weiteres Kriterium angedeutet, das auf das zweite Signal s2(t) oder s2d angewendet werden kann. Es kann z.B. vorgegeben werden, dass das Signal s2(t) oder s2d von dem ersten Messwert (Anfangspunkt von A1) bis zum vierten Messpunkt (Endpunkt von A1) das Signal s2(t) oder s2d monoton steigt. Die Messpunkte sind hier als kleine Rauten an der Signalkurve des Signals s2(t) oder s2d dargestellt.

In Fig. 12 ist das Beispiel eines Detektionsverfahrens gezeigt, das nicht erfolgreich abgeschlossen wurde. Das erste schnelle Signal s1(t) oder s1d ist deutlich zu klein und übersteigt zu keinem Zeitpunkt den ersten Schwellwert T1. Trotzdem tritt in diesem Beispiel ein langsames Signal s2(t) oder s2d auf, das im Prinzip ein zweites Kriterium erfüllen würde, da es den zweiten Schwellwert T3 am Punkt X2 übersteigt. Spätestens zum Zeitpunkt X2 wird hier ein Stoppsignal für einen sanften Bremsvorgang (z.B. gemäss Prozess 212) gesetzt oder übergeben, um die Zustellbewegung B zu unterbrechen. Im Flussdiagramm nach Fig. 8 verzweigt das Verfahren am Knoten K1 in Richtung des Spezial-Prozesses 209.

In den gezeigten Beispielen der Figuren 11 und 12, beträgt das Zeitfenster DRT für das Aufzeichnen (Speichern) der digitalen Signale s1d, s2d eine Sekunde. In dem gezeigten Beispiel beträgt die Schrittweite in Amplitudenrichtung A 4,2 mV und die Schrittweite auf der ersten Zeitachse beträgt 250 µs und auf der zweiten Zeitachse 5 ms.

Je nach Ausführungsform kann der Vergleich mit dem ersten Schwellwert T1 durch den 1. Mikroprozessor 11 implementiert sein. Der Vergleich erfolgt in diesem Fall also anhand des digitalisierten ersten Signals s1d. Der Vergleich kann aber auch anhand des analogen Signals s1(t) erfolgen und z.B. als Funktionsblock in das 1. Filtermodul 30 integriert sein.

In einer besonders bevorzugten Ausführungsform ist einer oder sind beide Filtermodule 30, 40 mittels Softwarealgorithmen (quasi als Softfilter) realisiert. Dies hat den Vorteil, dass die Filterfunktionen, die zur Anwendung kommen, angepasst werden können. Eine Implementierung der Filtermodule 30, 40 in Form von Hardware, wie z.B. in Fig. 10 gezeigt, hat den Vorteil, dass diese Filtermodule 30, 40 besonders schnell arbeiten.

In einer besonders bevorzugten Ausführungsform werden die beiden Signale s1d und s2d temporär oder dauerhaft abgespeichert, um anhand der gespeicherten Werte deren Verarbeitung vornehmen zu können.

Je nach Ausführungsform kann ein Stopp der Zustellbewegung B auch dann ausgelöst werden, wenn z.B. das langsame zweite Signal eine zu grosse Steigung ST aufweist.

Das Verfahren, respektive die Vorrichtung 110 kann während des Verfahrensablaufs oder anschliessend einen Report absetzen, der Angaben zum Ablauf des Verfahrens enthält. Dieser Report kann zum Beispiel in der Form eines Protokolls die einzelnen Ereignisse zusammen mit Zeitwerten t, Amplitudenwerten A usw. ausgeben.

In einer besonders bevorzugten Ausführungsform werden die Signale s1d und/oder s2d permanent oder nur im Falle besonderer Ereignisse (z.B. beim Auftreten eines der Fehler E1 oder E2) gespeichert. Im letzteren Fall wird deutlich weniger Speicherplatz "verbracht".

In einer besonders bevorzugten Ausführungsform werden sowohl negative Signale s1(t), s2(t) als auch positive Signale ausgewertet. Die Signale mit negativem Vorzeichen (siehe z.B. Figuren 11 und 12) können z.B. beim Eintauchen des Fühlers 3 auftreten, während Signale mit positivem Vorzeichen z.B. beim Austauchen auftreten können. Die Betrachtung positiver und negativer Signale kann auch beim Durchwandern einer Phasengrenze (je nach Bewegungsrichtung) sinnvoll sein. Vorzugsweise werden die Austauchsignale auf ähnliche Art und Weise ausgewertet, wie in Fig. 8 dargestellt. Die jeweiligen Reaktionen und Verzweigungen können jedoch anders ausgeführt sein. Ausserdem kommen beim Auswerten/Verarbeiten der Austauchsignale vorzugsweise andere Kriterien zur Signalverarbeitung zur Anwendung.

Eine Betrachtung des Vorzeichens kann z.B. auch dann wichtige Informationen liefern, wenn es sich um ein Laborgerät 100 handelt, das Flüssigkeit 1 aus einem Flüssigkeitsbehälter 5 aspiriert und bei dem die Detektion einer Phasengrenze, gemäss Erfindung, zum Einsatz kommt. Während dem Aspirieren sinkt das Flüssigkeitsniveau im Flüssigkeitsbehälter 5 und die Nadel oder der Fühler 3 wird nachgeführt. Wenn die Nadel oder der Fühler 3 zu langsam nachgeführt wird, dann kann der Sonderfall auftreten, dass die Nadel oder der Fühler 3 plötzlich wieder aus der Flüssigkeit 1 austaucht. Durch eine Auswertung des Signals s(t), das beim Austauchen entsteht, und unter Berücksichtigung des Vorzeichens dieses Signals s(t) kann die Vorrichtung 110 erkennen, dass es zu einem unerwarteten Austauchen gekommen ist. In diesem Sonderfall können entsprechende Massnahmen eingeleitet werden.

In einer besonders bevorzugten Ausführungsform kommt vorzugsweise in einem vorbereitenden Schritt unter Einsatz des Fühlers 3 und der Schaltung 2, 7, 8 ein Sensitivitätsmessverfahren zur Anwendung, um anhand von so ermittelten Flüssigkeitseigenschaften (wie Leitfähigkeit und/oder Permitivität) in einem weiteren Schritt eine automatisierte Einstellung von Parametern und/oder Kriterien vornehmen zu können. Auf diesem Weg kann je nach Eigenschaft der zu detektierenden Flüssigkeit (z.B. je nach Leitfähigkeit) eine automatische Einstellung der Vorrichtung 110 und/oder des Laborgeräts 100 vorgenommen werden. Somit können in dieser Ausführungsform vordefinierte Einstellungen für jede Form und Kombination von Flüssigkeiten 1, Fühlern 3, Laborgerät 100, etc. vorgenommen werden. Durch eine Anpassung an die Flüssigkeitseigenschaften können reale Signale besser von Störsignalen und Interferenzen unterschieden werden. Die Detektionsgenauigkeit wird dadurch verbessert. Ausserdem braucht es weniger manuelle Interventionen.

Bei einem erfindungsgemässen Sensitivitätsmessverfahren macht man sich zu Nutze, dass die meisten Flüssigkeiten in Gruppen eingeteilt werden können und dass jede dieser Gruppen charakteristische Eigenschaften aufweist. Vorzugsweise wird das erste Kriterium, hier der Schwellwert T1, aufgrund eines erfindungsgemässen Sensitivitätsmessverfahrens festgelegt oder eingestellt. Die anderen Kriterien zur Beurteilung/Verarbeitung des ersten Signals s1(t) und/oder des zweiten Signals s2(t) können dann automatisch von dem Schwellwert T1 abgeleitet oder aus einer Tabelle abgefragt werden.

Es ist ein Vorteil einer Kombination des erfindungsgemässen Detektionsverfahrens mit dem erfindungsgemässen Sensitivitätsmessverfahren, dass zuverlässige und sehr sensitive Messungen mit einem minimalen Input des Benutzers der Vorrichtung 110 oder des Laborgeräts 100 möglich sind. Bisher muss z.B. mit einem Leitfähigkeitsmessgerät die Leitfähigkeit von Hand ermittelt werden. Oft werden die Leitfähigkeitsmessungen in separaten Behältern vorgenommen, was zu einem erhöhten Verbrauch der oft sehr teueren Reagenzien führen kann.

In einer besonders bevorzugten Ausführungsform wird z.B. die Referenzspannung entsprechend der aktuellen z-Position des Fühlers 3 eingestellt. Damit kann eine Abhängigkeit von der Zustellposition vorgegeben bzw. ausgeglichen werden. Dieses Einstellen kann kontinuierlich oder stufenweise erfolgen. Das Einstellen kann auch in Abhängigkeit von der Geometrie des Flüssigkeitsbehälters 5 und/oder der Eigenschaften der Flüssigkeit 1 gewählt werden. Die Empfindlichkeit wird vorzugsweise als Funktion der z-Position eingestellt, um z.B. kleine (Rest-) Mengen genauer detektieren zu können. Ausserdem kann durch das Vorsehen sich ändernder Kriterien, Schwellwerte oder Parameter mit zunehmender Zustelltiefe verhindert werden, dass aufgrund einer zu grossen Anfangsempfindlichkeit Störungen auftreten.

In einer weiteren Ausführungsform werden mehr als nur zwei Filtermodule 30, 40 eingesetzt. Dadurch stehen dann weitere Signale mit unterschiedlichen Eigenschaften zur Verfügung, durch deren Auswertung weitere Informationen im Zusammenhang mit der Flüssigkeitsdetektion gewonnen werden können.

Es ist ein Vorteil des erfindungsgemässen Detektionsverfahrens, dass eine Unterscheidung zwischen einem wirklichen Detektionssignal s(t) und einem künstlichen Signal, das z.B. durch eine elektrostatische Entladung (z.B. aufgrund parasitärer Induktion) entsteht, möglich ist.

Untersuchungen haben ergeben, dass die analogen Signale s1(t) und s2(t), respektive die digitalen Signale s1d und s2d, selbstähnlich sind. D.h. die Signalform dieser Signale ist ähnlich. Diese Eigenschaft kann eingesetzt werden, um z.B. den zu erwartenden Verlauf eines Signals vorherzuberechnen (z.B. durch Extrapolation). In diesem Fall muss nicht unbedingt bis zum Ende eines Signals gewartet werden, sondern es können schon frühzeitig Schlüsse gezogen werden. In Fig. 11 ist dies anhand der Pulsweite P1, respektive des verkürzten Zeitfensters angedeutet. Man nutzt hier die Kenntnis aus, dass das Signal s1(t) mit grosser Wahrscheinlichkeit ein "echtes" Detektionssignal ist, wenn es z.B. innerhalb des Zeitfensters weiter ansteigt.

Die Selbstähnlichkeit der Signale ermöglicht auch eine weitergehende digitale Auswertung der Signale. So kann ein schneller Vergleich der aktuell ermittelten Signale mit abgespeicherten Sollsignalen erfolgen, um schnell, d.h. frühzeitig, eine erfolgreiche Detektion zu erkennen.

Die Selbstähnlichkeit der Signale ermöglicht auch eine verbesserte digitale Auswertung z.B. des zweiten Signals s2(t) oder s2d. Es kann z.B. anhand des Verlaufs des Signals s1(t) oder s1d auf die zu erwartenden Eigenschaften des zweiten Signals s2(t) oder s2d geschlossen werden. Dies ermöglicht z.B. ein Anpassen (der Einstellungen) des 2. Filtermoduls 40.

Anhand einer digitalen Auswertung der Signale s1d und s2d können auch Sonderfälle erkannt und abgehandelt werden.

In einer besonders bevorzugten Ausführungsform werden sogenannte Bibliotheken angelegt, auf die das Laborgerät 100 oder die Vorrichtung 110 zugreifen kann. Zu diesem Zweck können die digitalisierten Signale (z.B. s1d und/oder s2d) abgespeichert werden. Damit können selbstlernende oder zumindest anpassungsfähige Lösungen realisiert werden.

In einer besonders bevorzugten Ausführungsform werden Rohdaten (z.B. die Signale s1d und/oder s2d) und eventuell auch andere Daten (z.B. z-Position etc.) abgespeichert. Andere Prozesse und Geräte (z.B. das Laborgerät 100) können so ausgelegt sein, dass sie auf diese Daten zugreifen können.

Bei anderen Ausführungsform, auf die sich das vorher Beschriebene 1:1 anwenden lässt, kommt statt einer Lade-/Entlade-Schaltung 2 entweder ein Schwingkreis zum Einsatz, dessen Frequenz sich mit ändernder effektiver Kapazität am Fühler 3 verändert, oder es kommt eine Schaltung zum Einsatz, um die Kapazitätsänderung (dc/dt) anhand einer Phasen-, Spannungs-, oder Stromänderung zu detektieren.

Die Erfindung der verschiedenen Ausführungsformen lässt sich auf Einzelkanal-Laborgeräte 100 und auch auf mehrkanalige Laborgeräte 100 anwenden.

Vorzugsweise umfasst die Vorrichtung 110 einen Fehlercode-Generator, um je nach Situation einen Fehlercode (z.B. E1 und E2) zur weiteren Verarbeitung ausgeben zu können.

Die Ausgabe (Prozess 208 in Fig. 5) erfolgt so, dass durch einen anderen Prozess oder ein anderes Element der Vorrichtung 110 oder des Laborgeräts 100 (z.B. ein Steuerungssystem oder -computer) eine Weiterverarbeitung möglich ist.

**Bezugszeichen:**

| | |
|---|---|
| Flüssigkeit | 1 |
| Flüssigkeiten einzelner Kanäle | 1.1 - 1.8 |
| elektronische Lade-/Entlade-Schaltung | 2 |
| zustellbarer Fühler (z.B. Pipettenspitze) | 3, 3.1 - 3.8 |
| Grundplatte | 4 |
| Flüssigkeitsbehälter | 5 |
| Flüssigkeitsbehälter einzelner Kanäle | 5.1 - 5.8 |
| Eingangsseite | 6 |
| Signalverarbeitungsschaltung | 7 |
| Controllermodul | 8 |
| Bus | 9 |
| Zustellmittel (z.B. DC-Motoren) | 10, 10.1 - 10.8 |
| 1. Mikroprozessor | 11 |
| 2. Mikroprozessor | 12 |
| Schaltung | 13 |
| Leitungen | 14 |
| Schnittstelle | 15 |
| 1. A/D Wandler | 16 |
| 2. A/D Wandler | 17 |
| (CAN) Bus | 18 |
| Vergleicher (Comparator) | 19 |
| Filtermodul | 20 |
| Offset-Verschiebung | 21 |
| Hauptverstärker | 22 |
| | |
| 1. Filtermodul | 30 |
| 1. Entkoppler | 31 |
| 1. Bandpassfilter | 32 |
| 1. Nachverstärker | 33 |
| | |
| 2. Filtermodul | 40 |
| 2. Entkoppler | 41 |
| 2. Bandpassfilter | 42 |
| 2. Nachverstärker | 43 |
| | |
| Laborgerät | 100 |
| Vorrichtung | 110 |
| | |
| Zustellbewegung | 200 |
| Abfrage dc/dt | 201 |
| Auswerten eines Ausgangssignals | 202 |
| s(t) filtern | 203 |
| Erstes Signalkriterium auf s1(t) anwenden | 204 |
| zweites Signalkriterium auf s2(t) anwenden | 205 |
| Prüfen, ob Kriterien erfüllt sind | 206 |
| Prüfen, ob Kriterien erfüllt sind | 207 |
| Ausgabe einer Kennung | 208 |
| Sanftes Bremsen wegen des langsamen Signals | 209 |
| s2(t) | |
| Start der Detektion | 210 |
| Stopp bei Tauchposition Z1 | 211 |
| Stopp | 212 |
| Rückzug | 213 |
| Fehlercode E1 ausgeben | 214 |
| Prüfen des Fühlers | 215 |
| Detektion OK | 216 |
| Rückzug | 217 |
| Fehlercode E2 ausgeben | 218 |
| | |
| Amplitude | A |
| Weiteres Kriterium | A1 |
| Zustellbewegung | B |
| Zustellbewegung einzelner Kanäle | B1-B8 |
| Parameter | c |
| Kapazitätsänderung | Cₘₑₐₛ |
| Streukapazität | C_{tip/tip} |
| Kopplungskondensator | C_{coupl} |
| Kapazität zwischen Fühler und Flüssigkeit | C_{tip/liq} |
| Kapazität zwischen Fühler und Flüssigkeit beim | C_{tip/liq-in} |
| Eintauchen | |
| Kapazität zwischen Fühler und Flüssigkeit bei | C_{tip/liq-out} |
| nicht eingetauchtem Fühler | |
| Schaltungskapazität | C_{circuit} |
| Kapazität zwischen dem Fühler und dem | C_{tip/worktable} |
| Arbeitstisch | |
| Kapazität des Kabels | C_{cable} |
| Kapazität der Filterschaltung | C_{filter} |
| Gesamtkapazitäten | *Cₜₒₜₐₗ* |
| Kapazitätsänderung | ΔC bzw. dc/dt |
| Relative Kapazität | dc |
| Relative Zeit oder Zeiteinheit | dt |
| Datenaufzeichnungszeitfenster | DRT |
| Fehler | E1, E2 |
| Frequenzen der Filter | f1, f2 |
| Zeitfenster | F2 |
| Knoten | K1, K2, K3, K4, K5 |
| Pulsweite | P1, P2 |
| Schnittpunkt | Px |
| Ausgangssignal | s(t) |
| verstärktes Signal | s*(t) |
| 1. Signal | s1(t) |
| 1. Signal digitalisiert | s1d |
| 2. Signal | s2(t) |
| 2. Signal digitalisiert | s2d |
| Steigung | ST |
| Referenzspannung | Vref |
| Betriebsspannung | V+ |
| Pu n kte | X1, X2, X3, X4 |
| Achse | z |
| Tauchposition (submerge position) | Z1 |
| Startposition | Z-Start |
| maximale (Eintauch-) Position | Z-Max |
| Verzögerung | Δt |
| Zeit | t |
| Erster Schwellwert | T2 |
| Zweiter Schwellwert | T2 |
| weiterer Schwellwert | T3 |

## Patentansprüche

1. Verfahren zum Detektieren einer Phasengrenze zwischen zwei Medien in einem Flüssigkeitsbehälter (5) mit einem Fühler (3), der beim Erreichen der Phasengrenze eine Kapazitätsänderung (dc/dt) hervorruft, wobei das Verfahren die folgenden Schritte umfasst:
a. Ausführen (200) einer Zustellbewegung (B), um den Fühler (3) in Richtung der Phasengrenze (1) zuzustellen,
b. Auswerten (202) eines Ausgangssignals (s(t)) des Fühlers (3), um eine Kapazitätsänderung (dc/dt) zu detektieren,
c. Beim Auswerten (202) des Ausgangssignals (s(t)) Auftrennen (203) des Ausgangssignals (s(t)) mittels einer Schaltung und eines ersten Filterverfahrens in ein erstes Signal (s1(t), s1d) mit kurzer Pulsweite und mittels eines zweiten Filterverfahrens in ein zweites Signal (s2(t), s2d) mit grösserer Pulsweite, wobei die Schaltung umfasst:
- einen ersten Kanal mit einem ersten Filtermodul (30), um das erstes Signal (s1(t), s1d) aus dem Ausgangssignal (s(t)) zu filtern,
- einen zweiten Kanal mit einem zweiten Filtermodul (40), um das zweites Signal (s2(t), s2d) aus dem Ausgangssignal (s(t)) zu filtern,
d. Ermitteln (204, 206), ob das erste Signal (s1(t), s1d) ein vorgegebenes erstes Signalkriterium (T1, P1) erfüllt,
e. Ermitteln (205, 207), ob das zweite Signal (s2(t), s2d) ein vorgegebenes zweites Signalkriterium (T2, P2, ST, A1) erfüllt, und
f. Falls das erste Signalkriterium (T1, P1) und das zweite Signalkriterium (T2, P2, ST, A1) erfüllt sind, Ausgabe (208) einer Kennung, die eine Detektion einer Phasengrenze darstellt oder anzeigt.

2. Verfahren nach Anspruch 1, **dadurch gekennzeichnet, dass** mindestens während des Ausführens von Schritt a. (200) der Fühler (3) wiederholt elektrisch geladen und entladen wird.

3. Verfahren nach Anspruch 1 oder 2, **dadurch gekennzeichnet, dass** die Schritte b. bis e. wiederholt werden, bis im Schritt f. die Erfüllung des ersten Signalkriteriums (T1, P1) und des zweiten Signalkriteriums (T2, P2, ST, A1) ermittelt wurde, wobei während der Wiederholung der Schritte b. bis e. die Zustellbewegung (B) weiter ausgeführt wird.

4. Verfahren nach Anspruch 1, 2 oder 3, **dadurch gekennzeichnet, dass** in Schritt e. als zweites Signalkriterium (T2, P2, ST, A1) ermittelt wird, ob das zweite Signal (s2(t), s2d) kontinuierlich steigt.

5. Verfahren nach Anspruch 4, **dadurch gekennzeichnet, dass** in Schritt e. als weiteres zweites Signalkriterium (T2, P2, ST, A1) ermittelt wird, ob das zweite Signal (s2(t), s2d) in einer vorgegebenen Zeit (F2) einen Schwellwert (T2) erreicht.

6. Verfahren nach Anspruch 1, 2 oder 3, **dadurch gekennzeichnet, dass** in Schritt d. als erstes Signalkriterium (T1, P1) ermittelt wird,
- ob das erste Signal (s1(t), s1d) einen ersten Schwellwert (T1) erreicht, und/oder
- ob eine Pulsweite des ersten Signals (s1(t), s1d) eine Mindestpulsbreite (P1) erreicht, und/oder
- ob das erste Signal (s1(t), s1d) während eines vorgegebenen Zeitfensters ansteigt,
wobei Schritt d. in vorgegebenen ersten Zeitabständen wiederholt wird.

7. Verfahren nach einem der vorhergehenden Ansprüche, **dadurch gekennzeichnet, dass** die Zustellbewegung (B) des Fühlers (3) sanft gebremst wird, falls in Schritt e. das zweite Signal (s2(t), s2d) ein weiteres Signalkriterium (ST; T3) erfüllt ohne dass im Schritt d. das erste Signal (s1(t), s1d) das erste Signalkriterium (T1, P1) erfüllt hat.

8. Verfahren nach einem der Ansprüche 1 bis 6, **dadurch gekennzeichnet, dass** während der Schritte d. und e. auch die Vorzeichen des ersten Signals (s1(t), s1d) und/oder des zweiten Signals (s2(t), s2d) ermittelt werden, um dann in einem weiteren Schritt anhand der Vorzeichen ein Eintauchen des Fühlers (3) in die Flüssigkeit (1) oder ein Austauchen des Fühlers (3) aus der Flüssigkeit (1), oder das Passieren einer Phasengrenzen zu identifizieren.

9. Verfahren nach einem der vorhergehenden Ansprüche, **dadurch gekennzeichnet, dass,** vorzugsweise in einem vorbereitenden Schritt, unter Einsatz des Fühlers (3) und der Schaltung (2; 7, 8) ein Sensitivitätsmessverfahren ausgeführt wird, um anhand von so ermittelten Flüssigkeitseigenschaften in einem weiteren Schritt eine automatisierte Voreinstellung eines Schwellwerts, Parameters oder Kriteriums der Schaltung (2; 7, 8) vorzunehmen.

10. Verfahren nach einem der vorhergehenden Ansprüche, **dadurch gekennzeichnet, dass** eine Einstellung eines Schwellwerts, Parameters oder Kriteriums anhand der aktuellen Position des Fühlers (3) vorgenommen wird.

11. Vorrichtung (110) zum Detektieren einer Phasengrenze zwischen zwei Medien in einem Flüssigkeitsbehälter (5), mit
- einem Fühler (3), der in Richtung der Phasengrenze zustellbar ist,
- einer Schaltung (2; 7, 8), die ein Ausgangssignal (s(t)) des Fühlers (3) verarbeitet, um eine Kapazitätsänderung (dc/dt) zu detektieren,
**dadurch gekennzeichnet, dass** die Schaltung (2; 7, 8) umfasst:
- einen ersten Kanal mit einem ersten Filtermodul (30), um ein erstes Signal (s1(t), s1d) mit kurzer Pulsweite aus dem Ausgangssignal (s(t)) zu filtern,
- einen zweiten Kanal mit einem zweiten Filtermodul (40), um ein zweites Signal (s2(t), s2d) mit grösserer Pulsweite aus dem Ausgangssignal (s(t)) zu filtern,
- ein Controllermodul (8) mit
o einem Komparatormodul (11), das so ausgelegt ist, dass ermittelbar ist, ob das erste Signal (s1(t), s1d) einen ersten Schwellwert (T1) erreicht, und mit
o einem Verarbeitungsmodul (12), das so ausgelegt ist, dass ermittelbar ist, ob das zweite Signal (s2(t), s2d) mindestens ein vorgegebenes zweites Signalkriterium (T2, P2, ST, A1) erfüllt, und mit
o einem Mittel zur Ausgabe einer Kennung, die eine Detektion einer Phasengrenze darstellt oder anzeigt.

12. Vorrichtung (110) nach Anspruch 11, **dadurch gekennzeichnet, dass** das erste Filtermodul (30) und das zweite Filtermodul (40) in Hardware realisiert sind und dass zwei Analog-Digital-Wandler (16, 17) vorhanden sind, um das erste Signal (s1(t)) und das zweite Signal (s2(t)) separat zu digitalisieren, bevor ein erstes digitalisiertes Signal (s1d) und ein zweites digitalisiertes Signal (s2d) von dem Controllermodul (8) verarbeitet werden.

13. Vorrichtung (110) nach Anspruch 12, **dadurch gekennzeichnet, dass** das Controllermodul (8) zwei Mikroprozessoren (11, 12) umfasst, wobei ein erster der beiden Mikroprozessoren (11) zum Verarbeiten des ersten digitalisierten Signals (s1d) und der andere der beiden Mikroprozessoren (12) zum Verarbeiten des zweiten digitalisierten Signals (s2d) ausgelegt ist.

14. Vorrichtung (110) nach einem der Ansprüche 11 bis 13, **dadurch gekennzeichnet, dass** sie ein Modul für die Ermittlung von Flüssigkeitseigenschaften umfasst, wobei dieses Modul mit der Schaltung (2; 7, 8) verbindbar ist, um eine automatische Empfindlichkeitseinstellung der Schaltung (2; 7, 8) vornehmen zu können.

15. Vorrichtung (110) nach einem der Ansprüche 12 bis 14, **dadurch gekennzeichnet, dass** das Controllermodul (8) zwei Pufferspeicher umfasst, um erste digitalisierte Signale (s1d) und zweite digitalisierte Signale (s2d) zwischenzuspeichern.

16. Vorrichtung (110) nach einem der Ansprüche 11 bis 15, **dadurch gekennzeichnet, dass** sie einen Fehlercode-Generator umfasst, um je nach Situation einen Fehlercode (E1, E2) zur weiteren Verarbeitung ausgeben zu können.

17. Vorrichtung (110) nach einem der Ansprüche 11 bis 16, **dadurch gekennzeichnet, dass** sie ein Schaltelement umfasst, um den Fühler (3) mehrfach aufzuladen und zu entladen.

18. Vorrichtung (110) nach einem der Ansprüche 11 bis 16, **dadurch gekennzeichnet, dass** sie
- einen Schwingkreis umfasst, dessen Frequenz sich mit ändernder effektiver Kapazität am Fühler (3) verändert, oder
- eine Schaltung umfasst, um die Kapazitätsänderung (dc/dt) anhand einer Phasen-, Spannungs-, oder Stromänderung zu detektieren.

19. Laborgerät, das mindestens eine Vorrichtung (110) nach einem der Ansprüche 11 bis 18 umfasst.

## Claims

1. Method for detecting a phase boundary between two media in a container for liquid (5) with a sensor (3) that causes a capacitance change (dc/dt) when the phase boundary is reached, wherein the method comprises the following steps:
a. performing (200) a advance motion (B) in order to advance the sensor (3) in direction of the phase boundary (1),
b. evaluating (202) an output signal (s(t)) of the sensor (3) in order to detect a capacitance change (dc/dt),
c. separating (203) the output signal (s(t)) during the evaluation (202) of the output signal (s(t)) by means of a circuit and a first filter method into a first signal (s2(t), s1d) having a short pulse width and by means of a second filter method into a second signal (s2(t), s2d) having a larger pulse width, wherein the circuit comprises:
- a first channel with a first filter module (30) in order to filter the first signal (s1(t), s1d) out of the output signal (s(t)),
- a second channel with a second filter module (40) in order to filter the second signal /s2(t), s2d) out of the output signal (s(t)),
d. determining (204, 206) whether the first signal (s1(t), s1d) fulfils a prescribed first signal criterion (T1, P1),
e. determining (205, 207) whether the second signal (s2(t), s2d) fulfils a prescribed second signal criterion (T2, P2, ST, A1), and
f. in case the first signal criterion (T1, P1) and the second signal criterion (T2, P2, ST, A1) are fulfilled, providing (208) an identification that represents or indicates a detection of a phase boundary.

2. Method according to claim 1, **characterized in that** at least during the execution of step a. (200) the sensor (3) is repeatedly electrically charged and discharged.

3. Method according to claim 1 or 2, **characterized in that** the steps b. to e. are repeated until in step f. the fulfillment of the first signal criterion (T1, P1) and of the second signal criterion (T2, P2, ST, A1) was determined, wherein during the repetition of the steps b. to e. the advance motion (B) is further performed.

4. Method according to claim 1, 2 or 3, **characterized in that** in step e. as second criterion (T2, P2, ST, A1) is determined whether the second signal (s2(t), s2d) increases continuously.

5. Method according to claim 4, **characterized in that** in step e. as a further second criterion (T2, P2, ST, A1) is determined whether the second signal (s2(t), s2d) reaches a threshold value (T2) within a prescribed time (F2).

6. Method according to claim 1, 2 or 3, **characterized in that** in step d. as a first signal criterion (T1, P1) is determined
- whether the first signal (s1(t), s1d), reaches a first threshold value (T1), and/or
- whether a pulse width of the first signal (s1(t), s1d) reaches a minimum pulse width (P1), and/or
- whether the first signal (s1(t), s1d) increases within a prescribed time window,
wherein step d. is repeated in prescribed first time intervals.

7. Method according to one of the preceding claims, **characterized in that** the advance motion (B) of the sensor (3) is gently braked, in case that in step e. the second signal (s2(t), s2d) fulfils a further signal criterion (ST; T3) without the first signal (s1(t), s1d) fulfilling the first signal criterion (T1, P1) in step d.

8. Method according to one of the claims 1 to 6, **characterized in that** during the steps d. and e. the algebraic signs of the first signal (s1(t), s1 d) and/or of the second signal (s2(t), s2d) are also determined in order to identify in a further step with the help of the algebraic signs an immersion of the sensor (3) in the liquid (1) or a remove of the sensor (3) from the liquid (1), or the passing of a phase boundary.

9. Method according to one of the preceding claims, **characterized in that,** preferably in a preparatory step, a sensitivity measurement procedure is performed by the use of the sensor (3) and the circuit (2; 7, 8) in order to carry out an automated pre-setting of a threshold value, a parameter or a criterion of the circuit (2; 7, 8) in a further step by means of liquid characteristics determined this way.

10. Method according to one of the preceding claims, **characterized in that** a setting of a threshold value, a parameter or a criterion is performed based on the current position of the sensor (3).

11. Apparatus (110) for detecting a phase boundary between two media in a liquid container (5) with
- a sensor (3) that can be advanced in direction of the phase boundary,
- a circuit (2; 7, 8) that processes an output signal (s(t)) of the sensor (3) in order to detect a capacitance change (dc/dt),
**characterized in that** the circuit (2; 7, 8) comprises:
- a first channel with a first filter module (30) in order to filter a first signal (s1(t), s1d) having a short pulse width out of the output signal (s(t)),
- a second channel with a second filter module (40) in order to filter a second signal (s2(t), s2d) having a larger pulse width out of the output signal (s(t)),
- a controller module (8) with
o a comparator module (11) that is designed such that it is determinable whether the first signal (s1(t), s1d) has reached a first threshold value (T1), and with
o a processing module (12) that is designed such that it is determinable whether the second signal (s2(t), s2d) fulfils at least one prescribed second signal criterion (T2, P2, ST, A1), and with
o a means for providing an identification that represents or indicates a detection of a phase boundary.

12. Apparatus (110) according to claim 11, **characterized in that** the first filter module (30) and the second filter module (40) are realized in hardware and that two analog-to-digital converters (16, 17) are present in order to separately digitize the first signal (s1(t)) and the second signal (s2(t)) before a first digitized signal (s1d) and a second digitized signal (s1d) are processed by the controller module (8).

13. Apparatus (110) according to claim 12, **characterized in that** the controller module (8) comprises two microprocessors (11, 12), wherein a first of the two microprocessors (11) is designed for processing the first digitized signal (s1d) and the other one of the two microprocessors (12) is designed for processing the second digitized signal (s2d).

14. Apparatus (110) according to one of the claims 11 to 13, **characterized in that** the apparatus comprises a module for the determination of liquid characteristics, wherein said module is connectable to the circuit (2; 7, 8) in order to be able to perform an automatic sensitivity setting of the circuit (2; 7, 8).

15. Apparatus (110) according to one of claims 12 to 14, **characterized in that** the controller module (8) comprises two buffer memories in order to buffer first digitized signals (s1d) and second digitized signals (s2d).

16. Apparatus (110) according to one of the claims 11 to 15, **characterized in that** the apparatus comprises an error code generator in order to be able to provide depending on the situation an error code (E1, E2) for the further processing.

17. Apparatus (110) according to one of the claims 11 to 16, **characterized in that** the apparatus comprises a switch element in order to multiply charge and discharge the sensor (3).

18. Apparatus (110) according to one of the claims 11 to 16, **characterized in that** the apparatus
- comprises an oscillating circuit, whose frequency changes with a changing effective capacitance at the sensor (3), or
- comprises a circuit in order to detect the capacitance change (dc/dt) on the basis of a phase change, a voltage change, or a current change.

19. Laboratory instrument comprising at least one apparatus (110) according to one of the claims 11 to 18.

## Revendications

1. Procédé pour détecter une limite de phase entre deux milieux dans un récipient de liquide (5), comprenant un capteur (3) qui, lorsqu'il atteint la limite de phase, déclenche une variation de capacité (dc/dt), le procédé comprenant les étapes suivantes :
a. réaliser (200) un mouvement d'avance (B) pour avancer le capteur (3) en direction de la limite de phase (1),
b. évaluer (202) un signal de sortie (s(t)) du capteur (3) pour détecter une variation de capacité (dc/dt),
c. lors de l'évaluation (202) du signal de sortie (s(t)), séparer (203) le signal de sortie (s(t)) à l'aide d'un circuit et d'un premier procédé de filtrage au niveau d'un premier signal (s1(t), s1d) de faible largeur d'impulsion et à l'aide d'un deuxième procédé de filtrage au niveau d'un deuxième signal (s2(t), s2d) de plus grande largeur d'impulsion, le circuit comprenant :
- un premier canal avec un premier module de filtrage (30) pour filtrer le premier signal (s1 (t), s1d) depuis le signal de sortie (s(t)),
- un deuxième canal avec un deuxième module de filtrage (40) pour filtrer le deuxième signal (s2(t), s2d) depuis le signal de sortie (s(t)),
d. déterminer (204, 206) si le premier signal (s1(t), s1 d) remplit un premier critère de signal prédéterminé (T1, P1),
e. déterminer (205, 207) si le deuxième signal (s2(t), s2d) remplit un deuxième critère de signal prédéterminé (T2, P2, ST, A1), et
f. dans le cas où le premier critère de signal (T1, P1) et le deuxième critère de signal (T2, P2, ST, A1) sont remplis, émettre (208) une signalisation qui représente ou indique une détection d'une limite de phase.

2. Procédé selon la revendication 1, **caractérisé en ce que**, au moins pendant l'exécution de l'étape a. (200), le capteur (3) est chargé et déchargé électriquement plusieurs fois.

3. Procédé selon la revendication 1 ou 2, **caractérisé en ce que** les étapes b. à e. sont répétées jusqu'à ce qu'à l'étape f. il soit déterminé la satisfaction du premier critère de signal (T1, P1) et du deuxième critère de signal (T2, P2, ST, A1), dans lequel pendant la répétition des étapes b. à e. le mouvement d'avance (B) continue.

4. Procédé selon la revendication 1, 2 ou 3, **caractérisé en ce qu'**à l'étape e. il est déterminé comme deuxième critère de signal (T2, P2, ST, A1) si le deuxième signal (s2(t), s2d) augmente de façon continue.

5. Procédé selon la revendication 4, **caractérisé en ce qu'**à l'étape e. il est déterminé comme autre deuxième critère de signal (T2, P2, ST, A1) si le deuxième signal (s2(t), s2d) atteint une valeur seuil (T2) dans une période prédéterminée (F2).

6. Procédé selon la revendication 1, 2 ou 3, **caractérisé en ce qu'**à l'étape d. il est déterminé comme premier critère de signal (T1, P1),
- si le premier signal (s1(t), s1d) atteint une première valeur seuil (T1), et/ou
- si une largeur d'impulsion du premier signal (s1(t), s1d) atteint une largeur d'impulsion minimale (P1), et/ou
- si le premier signal (s1(t), s1d) monte sur une fenêtre de temps déterminée,
l'étape d. étant répétée à des premiers intervalles de temps prédéterminés.

7. Procédé selon l'une des revendications précédentes, **caractérisé en ce que** le mouvement d'avance (B) du capteur (3) est freiné en douceur dans le cas où à l'étape e. le deuxième signal (s2(t), s2d) remplit un autre critère de signal (ST; T3) sans qu'à l'étape d. le premier signal (s1 (t), s1 d) ait rempli le premier critère de signal (T1, P1).

8. Procédé selon l'une des revendications 1 à 6, **caractérisé en ce que** pendant les étapes d. et e. il est également identifié les signes algébriques du premier signal (s1(t), s1 d) et/ou du deuxième signal (s2(t), s2d), pour ensuite, lors d'une prochaine étape à l'aide des signes algébriques, identifier une immersion du capteur (3) dans le liquide (1) ou une remontée du capteur (3) hors du liquide (1) ou le passage d'une limite de phase.

9. Procédé selon l'une des revendications précédentes, **caractérisé en ce que**, de préférence au cours d'une étape préparatoire, on réalise en utilisant le capteur (3) et le circuit (2 ; 7, 8) un procédé de mesure de la sensibilité, pour pouvoir procéder ensuite lors d'une prochaine étape, à l'aide des propriétés de fluide ainsi déterminées, à un préréglage automatisé d'une valeur seuil, d'un paramètre ou d'un critère du circuit (2 ; 7,8).

10. Procédé selon l'une des revendications précédentes, **caractérisé en ce que** le réglage d'une valeur seuil, d'un paramètre ou d'un critère est réalisé à l'aide de la position actuelle du capteur (3).

11. Dispositif (110) pour détecter une limite de phase entre deux milieux dans un récipient de liquide (5), comprenant
- un capteur (3) pouvant être déplacé en direction de la limite de phase,
- un circuit (2 ; 7, 8) qui traite un signal de sortie (s(t)) du capteur (3) pour détecter une variation de capacité (dc/dt),
**caractérisé en ce que** le circuit (2 ; 7, 8) comprend :
- un premier canal avec un premier module de filtrage (30) pour filtrer un premier signal (s1(t), s1d) de faible largeur d'impulsion depuis le signal de sortie (s(t)),
- un deuxième canal avec un deuxième module de filtrage (40) pour filtrer un deuxième signal (s2(t), s2d) d'une plus grande largeur d'impulsion depuis le signal de sortie (s(t)),
- un module de contrôle (8) avec
o un module de comparaison (11) qui est conçu de façon à pouvoir déterminer si le premier signal (s1(t), s1 d) atteint une première valeur seuil (T1) et avec
o un module de traitement (12) qui est conçu de façon à pouvoir déterminer si le deuxième signal (s2(t), s2d) remplit au moins un deuxième critère de signal prédéterminé (T2, P2, ST, A1), et avec
o un moyen pour émettre une signalisation qui représente ou indique une détection d'une limite de phase.

12. Dispositif (110) selon la revendication 11, **caractérisé en ce que** le premier module de filtrage (30) et le deuxième module de filtrage (40) sont réalisés dans le hardware et **en ce qu'**il est prévu deux convertisseurs analogique/numérique (16, 17) pour numériser séparément le premier signal (s1(t)) et le deuxième signal (s2(t), avant de pouvoir traiter un premier signal numérisé (s1d) et un deuxième signal numérisé (s2d) par le module de contrôle (8).

13. Dispositif (110) selon la revendication 12, **caractérisé en ce que** le module de contrôle (8) comprend deux microprocesseurs (11, 12), l'un des deux microprocesseurs (11) étant conçu pour traiter le premier signal numérisé (s1d) et l'autre (12) étant conçu pour traiter le deuxième signal numérisé (s2d).

14. Dispositif (110) selon l'une des revendications 11 à 13, **caractérisé en ce qu'**il comprend un module pour déterminer les propriétés de liquide, ce module pouvant être raccordé au circuit (2 ; 7, 8) pour pouvoir procéder à un réglage automatique de la sensibilité du circuit (2 ; 7, 8).

15. Dispositif (110) selon l'une des revendications 12 à 14, **caractérisé en ce que** le module de contrôle (8) comprend deux mémoires tampon pour mémoriser temporairement des premiers signaux numérisés (s1d) et des deuxièmes signaux numérisés (s2d).

16. Dispositif (110) selon l'une des revendications 11 à 15, **caractérisé en ce qu'**il comprend un générateur de code d'erreur pour pouvoir, selon la situation, émettre un code d'erreur (E1, E2) pour un traitement ultérieur.

17. Dispositif (110) selon l'une des revendications 11 à 16, **caractérisé en ce qu'**il comprend un élément de commutation pour charger et décharger plusieurs fois le capteur (3).

18. Dispositif (110) selon l'une des revendications 11 à 16, **caractérisé en ce qu'**il comprend
- un circuit oscillant dont la fréquence se modifie avec la variation de la capacité effective au niveau du capteur (3), ou
- un circuit pour détecter la variation de capacité (dc/dt) à l'aide d'une variation de phase, de tension ou de courant.

19. Appareil de laboratoire comprenant au moins un dispositif (110) selon l'une des revendications 11 à 18.
